(19) Europäisches Patentamt
European Patent Office
Office européen des brevets

(11) **EP 3 253 061 A1**

(12) **EUROPEAN PATENT APPLICATION**
published in accordance with Art. 153(4) EPC

(43) Date of publication:
06.12.2017 Bulletin 2017/49

(51) Int Cl.:
***H04N 19/51*** (2014.01)

(21) Application number: 16742808.5

(22) Date of filing: 29.01.2016

(86) International application number:
**PCT/CN2016/072790**

(87) International publication number:
**WO 2016/119746 (04.08.2016 Gazette 2016/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 29.01.2015 CN 201510045993
28.01.2016 CN 201610058685

(71) Applicants:
• **Tongji University**
**Shanghai 200092 (CN)**
• **ZTE Corporation**
**Shenzhen, Guangdong 518057 (CN)**

(72) Inventors:
• **LIN, Tao**
**Shanghai 200092 (CN)**
• **LI, Ming**
**Shenzhen**
**Guangdong 518057 (CN)**
• **SHANG, Guoqiang**
**Shenzhen**
**Guangdong 518057 (CN)**
• **WU, Zhao**
**Shenzhen**
**Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **IMAGE CODING METHOD AND APPARATUS, AND IMAGE DECODING METHOD AND APPARATUS**

(57) An image coding method and apparatus, and an image decoding method and apparatus are provided. In the coding method, a regulation operation is performed on an original value of a copying parameter of a coding block adopting a copying coding technique to obtain a regulated value of the copying parameter; and coded bits, which are obtained by coding the regulated value, is further written into a bitstream. By the solution, a problem of existence of a redundancy in a numerical value of the copying parameter written into the bitstream in the related technology is solved, and an effect of improving coding efficiency is achieved.

EP 3 253 061 A1

When a current coding block is being coded, comprehensively regulate an original value of a copying parameter of a copying coding technique to obtain a regulated value of the copying parameter — S102

Code and write the regulated value into a video bitstream — S104

**Fig.1**

**Description**

**Technical Field**

The present disclosure relates to the field of image (or picture) coding and decoding, and particularly to an image decoding method and apparatus, and an image decoding method and apparatus.

**Background**

Along with development of resolutions of televisions and displays into ultra high definition (4K) and extra ultra high definition (8K) and development and popularization of a new-generation cloud computing and information processing mode and platform adopting a remote desktop as a typical representation form, there is a requirement for applying video image data compression to a higher-resolution composite image including a computer screen image and an image shot by a camera. An ultra high compression rate and extremely high-quality data compression technology for a video image becomes indispensable.

Performing ultra high efficiency compression on a video image by fully utilizing characteristics of a 4K/8K image (or picture) and a computer screen image (or picture) is also a main objective of a latest international video compression standard High Efficiency Video Coding (HEVC) under formulation and a plurality of other international standards, national standards and industrial standards.

A natural form of a digital video signal is a sequence of images (or pictures). An image is usually a rectangular region formed by a plurality of pixels. A digital video signal, which is sometimes called as a video sequence or a sequence for short, is formed by dozens of and even tens of thousands of frames of images (or pictures). Coding a digital video signal is to code each image. At any time, the image which is being coded is called as a current coding image. Similarly, decoding a video bitstream, which is sometimes called as a bitstream or a stream for short, obtained by compressing the digital video signal is to decode a bitstream of each image. At any time, the image which is being decoded is called as a current decoding image. The current coding image or the current decoding image may be collectively called as a current image.

In almost all international standards for video image coding such as Moving Picture Experts Group (MPEG-1/2/4) H.264/Advanced Video Coding (AVC) and HEVC, when an image is being coded (and correspondingly being decoded), the image may be partitioned into a plurality of sub-images with MxM pixels, called as coding blocks (which are decoding blocks from the point of decoding, collectively called as coding and decoding blocks) or "Coding Units (CUs)", and the blocks of the image are coded one by one by taking a CU as a basic coding unit. M may be usually 4, 8, 16, 32 or 64. Therefore, coding a video sequence is to sequentially code CUs of images one by one. At any time, a CU which is being coded is called as a current coding CU. Similarly, decoding a bitstream of a video image sequence is to sequentially decode CUs of images to finally reconstruct the whole video sequence. At any time, a CU which is being decoded is called as a current decoding CU. The current coding CU or the current decoding CU may be collectively called as a current CU.

In order to achieve adaptability to differences of contents and properties of different image parts in an image and pertinently and most effectively perform coding, sizes of different CUs in the image may be different, for example, some CUs may have a size of 8x8, while some CUs may have a size of 64x64. In order to seamlessly splice CUs with different sizes, an image may usually be partitioned into "Largest Coding Units (LCUs)" with completely the same size of, e.g., NxN pixels, at first, and then each LCU may be further partitioned into multiple tree-structured CUs of which sizes may not be the same. Therefore, the LCUs may also be called as "Coding Tree Units (CTUs)". For example, an image may be partitioned into LCUs with completely the same size of, e.g., 64x64 pixels (N=64) at first. Among these LCUs, a certain LCU may be formed by three CUs with 32x32 pixels and four CUs with 16x16 pixels, and in such a manner, the seven tree-structured CUs may form a complete CTU. Another LCU may be formed by two CUs with 32x32 pixels, three CUs with 16x16 pixels and twenty CUs with 8x8 pixels, and in such a manner, the 25 tree-structured CUs may form a complete CTU. Coding an image is to sequentially code CUs in CTUs. In the international standard HEVC, LCU and CTU are synonyms. A CU of which a size is equal to that of a CTU is called as a CU with a depth 0. CUs obtained by equally partitioning a CU with the depth 0 into quarters, respectively being upper, lower, left and right parts of this CU, are called as CUs with a depth 1. CUs obtained by equally partitioning a CU with the depth 1 into quarters, respectively being upper, lower, left and right parts of this CU, are called as CUs with a depth 2. CUs obtained by equally partitioning a CU with the depth 2 into quarters, respectively being upper, lower, left and right parts of this CU, are called as CUs with a depth 3.

A CU may further be partitioned into a plurality of sub-regions. The sub-regions may include, but not limited to, one or more Prediction Units (PUs), one or more Transform Units (TUs) and one or more Asymmetric Motion Partitioning (AMP) regions.

A colour pixel usually consists of three components. Two most common pixel colour formats include a Green, Blue and Red (GBR) colour format consisting of a green component, a blue component and a red component, and a YUV colour format, consisting of a luma component and two chroma components. Colour formats collectively called as YUV colour formats may actually include multiple colour formats, such as a YCbCr colour format. Therefore, when a CU is coded, one CU may be partitioned into three component planes (a G plane, a B plane and an R plane, or a Y plane, a U plane and a V plane). The three component planes may be coded respectively; alternatively, the three components of each pixel may be bundled and combined into a triple, and the CU formed by these triples may be coded in its entirety. The former pixel and component arrangement manner is called as a planar format of an image (and its CUs), while the latter pixel and component arrangement manner is called as a packed format of the image (and its CUs). A GBR colour format and a YUV colour format of a pixel are both three-component representation formats of the pixel.

Besides a three-component representation format of a pixel, another common representation format of the pixel in a related technology is a palette index representation format. In the palette index representation format, a numerical value of one pixel may be represented by an index of a palette. Numerical values or approximate numerical values of three components of the pixel to be represented are stored in a palette space, and an address in the palette is called as an index of the pixel stored in the address. One index may represent one component of a pixel, and one index may alternatively represent three components of a pixel. There may be one or more palettes. Under the condition that there are multiple palettes, a complete index may be formed by two parts, i.e. a palette number and an index of the palette with the palette number. An index representation format of a pixel is to represent the pixel with an index. The index representation format of the pixel is also called as an indexed color or pseudo color representation format of the pixel in a related technology, or is usually directly called as an indexed pixel or a pseudo pixel or a pixel index or an index. An index may also be called as an index number sometimes. Representing a pixel in an index representation format may also be called as indexing or indexation.

Other common pixel representation formats in a related technology include a CMYK representation format and a grayscale representation format.

According to whether to perform down-sampling on a chroma component or not, a YUV colour format may also be subdivided into a plurality of sub-formats, for example, a YUV4:4:4 pixel colour format under which one pixel is formed by one Y component, one U component and one V component; a YUV4:2:2 pixel colour format under which two horizontally adjacent pixels are formed by two Y components, one U component and one V component; and a YUV4:2:0 pixel colour format under which four horizontally and vertically adjacent pixels arranged according to 2x2 spatial positions are formed by four Y components, one U component and one V component. One component is usually represented by a number represented by 8-16 bits. The YUV4:2:2 pixel colour format and the YUV4:2:0 pixel colour format are both obtained by executing down-sampling of chroma component on the YUV4:4:4 pixel colour format. One pixel component may also be called as one pixel sample, or may be simply called as one sample.

A most basic element during coding or decoding may be one pixel, may alternatively be one pixel component, and may alternatively be one pixel index (i.e. indexed pixel). One pixel or pixel component or indexed pixel adopted as the most basic element for coding or decoding may collectively be called as one pixel sample, and sometimes may also be collectively called as one pixel value or simply called as one sample.

In the present disclosure and the application document of the present disclosure, "pixel sample", "pixel value", "sample", "indexed pixel" and "pixel index" are synonyms, and whether these terms represent a "pixel" or "a pixel component" or an "indexed pixel" or represent any one of the three should be clear to a skilled in the art based on the context. If this information cannot be clearly determined based on the context, any one of the three is represented.

In the present disclosure and the application document of the present disclosure, a coding block or a decoding block (collectively called as a coding and decoding block) is a region formed by a plurality of pixels. A shape of the coding and decoding block may be a rectangle, a square, a parallelogram, a trapezoid, a polygon, a round, an ellipse, a string or any other shape. The rectangle may also include a rectangle of which a width or height is one pixel, that is, a rectangle which is degenerated into a line (i.e. a line segment or a line shape). In one image, each coding and decoding block may have a different shape and size. In one image, some or all of coding and decoding blocks may have mutually overlapped parts, or none of the coding and decoding blocks may be overlapped. One coding and decoding block may be formed by "pixels" or "components of the pixels" or "indexed pixels" or mixture of the three, and may alternatively be formed by mixture of any two of the three. From the point of video image coding or decoding, a coding and decoding block may refer to a region which is coded or decoded in an image, including, but not limited to, at least one of: an LCU, a CTU, a CU, a sub-region of the CU, a PU or a TU.

An outstanding characteristic of a computer screen image is that there may usually be many similar and even completely the same pixel patterns in the same image. For example, a Chinese or foreign character frequently appearing in a computer screen image may be formed by a few basic strokes, and many similar or the same strokes may be found in the same image. A common menu, icon and the like in a computer screen image may also have many similar or the same patterns. Therefore, a coding technique usually adopted in related technologies for image and video compression may include the following copying techniques.

1) One copying technique is intraframe block copying, which may also be called as intraframe block matching or intraframe motion compensation or block matching or block copying. A basic operation of block copying coding or decoding is to copy a reference block with the same size (the same number of pixel samples) as a current block from a reconstructed reference pixel sample set for the current coding block or current decoding block (called as the current block) and assign a numerical value of the reference block to the current block as a predicted block or reconstructed block of the current block. A copying parameter of the block copying technique may include a displacement vector of the current block, which indicates a relative position between the reference block and the current block. One current block may have one displacement vector.

2) Another copying technique is micro-block copying, which may also be called as micro-block matching or micro-block copying. During micro-block copying, one current block with, for example, 8x8 pixel samples, may be partitioned into multiple micro-blocks (such as micro-blocks with 4x2 pixel samples or micro-blocks with 8x2 pixel samples or micro-blocks with 2x4 pixel samples or micro-blocks with 2x8 pixel samples). A basic operation of micro-block copying coding or decoding is to copy a reference micro-block from a reconstructed reference pixel sample set for each coding micro-block or decoding micro-block (called as a current micro-block) in the current block and assign a numerical value of the reference micro-block to the current micro-block as a predicted block or reconstructed block of the current micro-block. A copying parameter of the micro-block copying technique may include at least one of the following parameters: a displacement vector of the current micro-block, which indicates a relative position between the reference micro-block and the current micro-block; and an indicating parameter of the reconstructed reference pixel sample set, which indicates the reconstructed pixel sample set where the reference micro-block is located. One current micro-block may have one displacement vector. The number of displacement vectors for one current block is equal to the number of micro-blocks into which the current block is partitioned. The same or different reconstructed reference pixel sample sets may be used for micro-blocks in the same coding block.

3) Still another copying technique is line (called as strip for short) copying, which may be called as strip matching or strip copying. A strip is a micro-block with a height being 1 or a width being 1, such as a micro-block with 4x1 or 8x1 or 1x4 or 1x8 pixel samples. A basic operation of strip copying coding or decoding is to copy a reference strip from a reconstructed reference pixel sample set for each coding strip or decoding strip (called as a current strip for short) in a current block and assign a numerical value of the reference strip as a predicted strip or reconstructed strip of the current strip. Obviously, strip copying is a special embodiment of micro-block copying. A copying parameter of the strip copying technique may include at least one of the following parameters: a displacement vector of the current strip, which indicates a relative position between the reference strip and the current strip; and an indicating parameter of the reconstructed pixel sample set, which indicates the reconstructed pixel sample set where the reference strip is located. One current strip may have one displacement vector. The number of displacement vectors for one current block is equal to the number of strips into which the current block is partitioned. The same or different reconstructed reference pixel sample sets may be used for strips in the same coding block.

4) Still another copying technique is string copying, which may be called as string matching or string copying. During string copying, a current coding block or current decoding block (called as a current block) may be partitioned into multiple pixel sample strings with variable lengths. Here, the string refers to arranging pixel samples in a two-dimensional region in any shape into a string of which a length is far larger than a width (for example, a string of which a width is one pixel sample while a length is 37 pixel samples; or a string of which a width is two pixel samples while a length is 111 pixel samples, usually under, but not limited to, the condition that the length is an independent coding or decoding parameter while the width is a parameter which is predetermined or derived from another coding or decoding parameter). A basic operation of string copying coding or decoding is to copy a reference string from a reconstructed reference pixel sample set for each coding string or decoding string (called as a current string for short) in the current block and assign a numerical value of the reference string as a predicted string or reconstructed string of the current string. A copying parameter of the string copying technique may include at least one of the following parameters: a displacement vector of the current string, which indicates a relative position between the reference string and the current string; a copying length, i.e. a copying size, a length of the current string being the number of pixel samples; and an indicating parameter of the reconstructed pixel sample set, which indicates the reconstructed pixel sample set where the reference string is located. The length of the current string is equal to a length of the reference string. One current string may have one displacement vector and one copying length. The number of displacement vectors and the number of copying lengths for one current block is equal to the number of strings into which the current block is partitioned. The same or different reconstructed reference pixel sample sets may be used for strings in the same coding block. The string copying technique may further be divided, according to a path shape of a string, into the following subtypes.

4.1) One subtype of string copying technique is one-dimensional horizontal scanning string copying: a reference string and a current string are both one-dimensional pixel sample strings formed in a CTU or a CU according to a horizontal scanning sequence, and are equal in length, but two-dimensional regions formed by the two strings respectively may not have the same two-dimensional shapes.

4.2) Another subtype of string copying technique is one-dimensional vertical scanning string copying: a reference string and a current string are both one-dimensional pixel sample strings formed in a CTU or a CU according to a vertical scanning sequence, and are equal in length, but two-dimensional regions formed by the two strings respectively may not have the same two-dimensional shapes.

4.3) Still another subtype of string copying technique is simulated two-dimensional horizontal scanning conformal equal-width string copying, called as simulated two-dimensional horizontal string copying for short: a reference string and a current string are equal in length, and are both in completely the same two-dimensional shape formed according to a horizontal scanning sequence, and widths of formed two-dimensional regions are equal to the width of a current coding block or decoding block.

4.4) Still another subtype of string copying technique is simulated two-dimensional vertical scanning conformal equal-width string copying, called as simulated two-dimensional vertical string copying for short: a reference string and a current string are equal in length, and are both in completely the same two-dimensional shape formed according to a vertical scanning sequence, and widths of formed two-dimensional regions are equal to the width of a current coding block or decoding block.

4.5) Still another subtype of string copying technique is two-dimensional horizontal scanning conformal variable-width string copying, called as two-dimensional horizontal string copying for short: a reference string and a current string are equal in length, and are both in completely the same two-dimensional shape formed according to a horizontal scanning sequence, but widths of formed two-dimensional regions may not be equal to the width of a current coding block or decoding block, and instead, are variable widths not larger than the width of the current coding block or decoding block. In the string copying technique of this subtype, a copying parameter may further include a copying width of the two-dimensional region formed by the current string. The copying width may be an independent parameter or a subordinate parameter derived from another coding or decoding parameter.

4.6) Still another subtype of string copying technique is two-dimensional vertical scanning conformal variable-height string copying, called as two-dimensional vertical string copying for short: a reference string and a current string are equal in length, and are both in completely the same two-dimensional shape formed according to a vertical scanning sequence, but heights of formed two-dimensional regions may not be equal to the height of a current coding block or decoding block, and instead, are variable heights not larger than the height of the current coding block or decoding block. In the string copying technique of this subtype, a copying parameter may further include a copying height of the two-dimensional region formed by the current string. The copying height may be an independent parameter or a subordinate parameter derived from another coding or decoding parameter.

Above horizontal scanning may include Z-shaped scanning and arched scanning (that is, a scanning direction of an odd line is opposite to a scanning direction of an even line). Above vertical scanning may include Z-shaped scanning and arched scanning (that is, a scanning direction of an odd line is opposite to a scanning direction of an even line).

5) Still another copying technique is intraframe rectangular copying, which may be called as intraframe rectangular matching or rectangular matching or rectangular copying: during rectangular copying. A current coding block or current decoding block (called as a current block for short) may be partitioned into multiple rectangles formed by variable-width and variable-height pixel samples. Here, a rectangle refers to a two-dimensional region which is represented by a width and a height and has any size. A basic operation of rectangular copying coding or decoding is to copy a reference rectangle from a reconstructed reference pixel sample set for each coding rectangle or decoding rectangle (called as a current rectangle) in the current block and assign a numerical value of the reference rectangle to the current rectangle as a predicted rectangle or reconstructed rectangle of the current rectangle. The reference rectangle and the current rectangle are equal in width, are also equal in height, and thus are in completely the same two-dimensional rectangular shape. Such a rectangle may be formed by a pixel sample string, and a length of the string is a product of the height of the rectangle and the width of the rectangle, that is, the length of the string is just a multiple of a width of the two-dimensional region formed by the string (this multiple is the height of the two-dimensional region), and is also just a multiple of the height of the two-dimensional region formed by the string (this multiple is the width of the two-dimensional region). Obviously, rectangular copying is a special embodiment of the above string copying subtype 4.5) or 4.6), i.e. the length of the string is just the product of the height of the rectangle and the width of the rectangle. Rectangular copying belonging to the special embodiment of the string copying subtype 4.5) is called as horizontal scanning rectangular copying. Rectangular copying belonging to the special embodiment of the string copying subtype 4.6) is called as vertical scanning rectangular copying. A copying parameter of the rectangular copying technique may include at least one of the following parameters: a displacement vector of the current rectangle, which indicates a relative position between the reference rectangle and the current rectangle; a rectangle size, i.e. a copying size, which indicates numbers of pixel samples in a horizontal direction (i.e. width) and a vertical direction (i.e. height) of the current rectangle; and an indicating parameter of the reconstructed reference pixel sample set, which indicates the reconstructed pixel sample set where the reference micro-block is located. A size of the current rectangle is also a size of the reference rectangle. One current rectangle may have one displacement vector and one rectangle size. The number of displacement vectors and the number of rectangle sizes for one current block is equal to the number of rectangles into which the current block is partitioned. The same or different reconstructed reference pixel sample sets may be used for rectangles in the same coding block.

Another technology usually adopted in related technologies for image and video compression is a palette coding technique and a corresponding palette decoding technique, also called as an index copying technique. In the palette coding and corresponding decoding techniques, one palette is constructed or acquired at first, then all or part of pixels of a current coding block or a current decoding block are represented with an index of the palette, and the index is coded and decoded, including, but not limited to, performing coding and decoding on the index in various copying techniques, particularly coding or decoding of a string copying technique or coding and decoding of a rectangular copying technique.

A screen image may have regions with different properties, for example, some have similar or same patterns which are larger or more regular in shape, while some have similar or same patterns which are very small or irregular in shape. Therefore, multiple copying techniques may be adopted for one and the same image.

In a related technology, copying parameters of block copying, micro-block copying and strip copying are written into a bitstream by entropy coding after simple predictive (i.e. differential) coding, while coding parameters of string copying and rectangular copying are directly written into the bitstream by entropy coding. As a consequence, there exist considerable redundancies in numerical values of the coding parameters written into the bitstream, which makes coding efficient not so high. For the problem in the related technology, there is yet no effective solution at present.

**Summary**

Some embodiments of the present disclosure provide an image coding method and apparatus, and an image decoding method and apparatus, which may at least solve a problem of existence of a redundancy in a numerical value of a copying parameter written into a bitstream in a related technology.

According to an embodiment of the present disclosure, an image coding method is provided, which may include the following acts. When a current coding block is being coded, an original value of a copying parameter of a copying coding technique may be comprehensively regulated to obtain a regulated value of the copying parameter. The regulated value may be coded and written into a video bitstream. A comprehensive regulation operation may include at least one of:

component reduction: reducing, according to numerical values of components of one or more copying parameters, one or more value ranges of one or more components of at least one copying parameter except the one or more copying parameters;

component replacement: replacing part of regions in a one-dimensional, or two-dimensional, or three-dimensional or four-dimensional space formed by one or more numerical values of one or more components of the copying parameter;

component decorrelation: performing an independent or cross decorrelation operation on a component of a copying parameter or components of multiple copying parameters; and

multiset component binarization: selecting, according to numerical values of components of one or more copying parameters, one set from multiple sets of binarization to perform a binarization operation on one or more components of at least one copying parameter except the one or more copying parameters.

In an embodiment, a coding block may be a coding region of an image. The coding region may include at least one of: an LCU, a CTU, a CU, a sub-region of the CU, a PU, a TU, a pixel string, a pixel group, a pixel micro-block and a pixel strip.

In an embodiment, components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41. The component reduction may at least include: a basic operation (X, Y) formed by a cause component X and a result component Y, where a value range of the result component Y may be a subrange Y1 when a value of the cause component X is in a subrange X1, each of X and Y may be one of 1, 2, 3 and 4, and X and Y may be unequal to each other. Multiple basic operations may be combined into a combined operation according to any reasonable logic relationship of cause components of the multiple basic operations; the multiple basic operations may be merged into a merged operation according to any reasonable logic relationship of result components of the multiple basic operations; and multiple combined operations and merged operations may be combined or merged.

In an embodiment, components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41. Other coding parameters except the copying parameter may at least include: a non-current copying parameter A, a non-current copying parameter B, a non-current copying parameter C and a non-current copying parameter D. Value ranges of the non-current copying parameter A, the non-current copying parameter B, the non-current copying parameter C and the non-current copying parameter D may be a range A, a range B, a range C and a range D respectively. A subrange of the range A may at least include a subrange A1; a subrange of the range B may at least include a subrange B1; a subrange of the range C may at least include a subrange C1; a subrange of the range D may at least include a subrange D1. The component reduction may at least include: a basic operation (X, Y) formed by a cause parameter X and a result component Y of a non-current copying parameter X, where a value range of the result component Y may be a subrange Y1 when a value of the non-current copying parameter X is in a subrange X1, X may be one of A, B, C and D, and Y may be one of 1, 2, 3 and 4. Multiple basic operations may be combined into a combined operation according to any reasonable logic relationship of cause components of the multiple basic operations; the multiple basic operations may be merged into a merged operation according to any reasonable logic relationship of result components of the multiple basic operations; and multiple combined operations and merged operations may be combined or merged.

In an embodiment, components of the copying parameter may at least include the following copying parameter components of a current pixel sample segment: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41. Non-current copying parameters may at least include: a non-current copying parameter A, a non-current copying parameter B, a non-current copying parameter C and a non-current copying parameter D. The non-current copying parameter A may be a combination A of copying parameter components of a previous pixel sample segment of the current pixel sample segment; the non-current copying parameter B may be a combination B of the copying parameter components of the previous pixel sample segment of the current pixel sample segment; the non-current copying parameter C may be a combination C of the copying parameter components of the previous pixel sample segment of the current pixel sample segment; the non-current copying parameter D may be a combination D of the copying parameter components of the previous pixel sample segment of the current pixel sample segment. Value ranges of the non-current copying parameter A, the non-current copying parameter B, the non-current copying parameter C and the non-current copying parameter D may be a range A, a range B, a range C and a range D respectively. A subrange of the range A may at least include a subrange A1; a subrange of the range B may at least include a subrange B1; a subrange of the range C may at least include a subrange C1; a subrange of the range D may at least include a subrange D1. The component reduction may at least include: a basic operation (X, Y) formed by a cause parameter and a result component Y of a non-current copying parameter X, where a value range of the result component Y may be a subrange Y1 when a value of the non-current copying parameter X is in a subrange X1, X may be one of A, B, C and D, and Y may be one of 1, 2, 3 and 4. Multiple basic operations may be combined into a combined operation according to any reasonable logic relationship of cause components of the multiple basic operations; the multiple basic operations may be merged into a merged operation according to any reasonable logic relationship of result components of the multiple basic operations; and multiple combined operations and merged operations may be combined or merged.

In an embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may at least include: a combination of copying parameter components of a previous pixel sample segment of the current pixel sample segment, the combination including a displacement vector horizontal component BV0x, a displacement vector vertical component BV0y and a copying length Len0. Value ranges of the non-current copying parameters may satisfy a following condition: a reference pixel sample segment of the previous pixel sample segment is located in a predetermined reference region. The component reduction may at least include: if values of the copying parameter components BV0x and/or BV0y and/or Len0 of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

In an embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may include at least one of:

a combination of copying parameter components of a previous pixel sample segment of the current pixel sample segment, the combination including a displacement vector horizontal component BV0x, a displacement vector vertical component BV0y and a copying length Len0, a value range of the combination satisfying a following condition: a reference pixel sample segment of the previous pixel sample segment is located in a predetermined reference region; a coordinate of a first pixel of the current pixel sample segment, the coordinate including: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, where Ydelta may be an offset between a vertical-direction component of the coordinate and a vertical component Y1 of a coordinate of the first pixel; a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1, where Xdelta may be an offset between a horizontal-direction component of the coordinate and a horizontal component X1 of a coordinate of the first pixel.

The component reduction may include at least one of: when BV0x=0 and $1 B \leq V0y \leq Ymax$, Ymax being a maximum value of a value range of BV0y, subtracting a first unavailable range from the value range of the combination to obtain value ranges of copying parameters of the current pixel sample segment, wherein the first unavailable range may be that BVx=0, BVy is equal to BV0y or an integer multiple of BV0y and $BVy \leq Ydelta$; and when BV0y=0 and $1 \leq BV0x \leq Xmax$, Xmax being a maximum value of a value range of BV0x, subtracting a second unavailable range from the value range of the combination to obtain the value ranges of the copying parameters of the current pixel sample segment, wherein the second unavailable range may be that BVy=0, BVx is equal to BV0x or an integer multiple of BV0x and $BVx \leq Xdelta$.

In an embodiment, when BV0y is equal to 1, the component reduction may include at least one of:

when BV0x=0 and BV0y=1, subtracting a third unavailable range from the value range of the combination to obtain the value ranges of the copying parameters of the current pixel sample segment, where the third unavailable range may be that BVx=0 and $1 \leq BVy \leq$ (Ydelta;

when BV0y=0 and BV0x=1, subtracting a fourth unavailable range from the value range of the combination to obtain the value ranges of the copying parameters of the current pixel sample segment, where the fourth unavailable range may be that BVy=0 and $1 \leq BVx \leq Xdelta$;

when BV0x=0, BV0y=1 and the copying parameter component BVx of the current pixel sample segment is BVx=0, determining that the value range of the copying parameter component BVy of the current pixel sample segment is: $1 \leq (BVy-Ydelta) \leq (Ymax-Ydelta)$, where Ymax may be a maximum value of a value range of BVy of the combination, and BVy-Ydelta may be configured for writing into the bitstream after coding; and

when BV0y=0, BV0x=1 and the copying parameter component BVy of the current pixel sample segment is BVy=0, determining that the value range of the copying parameter component BVx of the current pixel sample segment is: $1 \leq (BVx-Xdelta) \leq (Xmax-Xdelta)$, where Xmax may be a maximum value of a value range of BVx of the combination, and BVx-Xdelta may be configured for writing into the bitstream after coding.

In an embodiment, one copying parameter component may correspond to multiple sets of binarization solutions, wherein there may exist a direct or indirect dedicated binarization mode in a Video Parameter Set (VPS) and/or Sequence Parameter Set (SPS) and/or Picture Parameter Set (PPS) and/or strip header and/or CTU header and/or CU header and/or coding and decoding block header in the bitstream. The dedicated binarization mode may indicate the coding block or decoding block to binarize the copying parameter components by adopting one set in the multiple sets of binarization solutions. The indirect dedicated binarization mode may include at least one of: a binarization mode derived by a depth of the coding block, a binarization mode derived by a quantization factor of the coding block, a binarization mode derived by whether to perform quantization on the coding block or not and a binarization mode derived by whether to perform transformation on the coding block or not.

In an embodiment, the component replacement may at least include: if a value of a copying parameter component and/or a value of a non-current copying parameter is equal to a predetermined numerical value, performing component replacement on another copying parameter component.

According to another embodiment of the present disclosure, an image decoding method is provided, which may include the following acts. A bitstream may be parsed to obtain a decoding parameter of a decoding block, and the decoding parameter may include at least one of the following parameters: a copying parameter of the decoding block and regulation indication information of the copying parameter. A regulation operation may be performed on the copying parameter to obtain a regulated reconstructed value of the copying parameter according to regulation indication information of the copying parameter. The decoding block may be decoded based on the regulated reconstructed value of the copying parameter. The act of performing the regulation operation on the copying parameter may include at least one of:

component reduction: reducing one or more value ranges of one or more components of the copying parameter according to numerical values of obtained components of one or more copying parameters, parsing related fields of the copying parameter in the bitstream within the one or more reduced value ranges, and determining the regulated reconstructed value of the copying parameter;

component replacement: replacing part of regions in a one-dimensional, or two-dimensional, or three-dimensional or four-dimensional space formed by one or more numerical values of one or more components of the copying parameter;

component correlation: parsing, according to numerical values of obtained components of one or more copying parameters, related fields of the copying parameter in the bitstream to determine the regulated reconstructed value of the copying parameter; and

multiset component binarization: parsing related fields of the copying parameter in the bitstream according to numerical values of obtained components of one or more copying parameters, and selecting one set from multiple sets of binarization to map the fields into numerical values of the one or more components of the copying parameter.

In an embodiment, a decoding block may be a decoding region of an image. The decoding region may include at least one of: an LCU, a CTU, a CU, a sub-region of the CU, a PU, a TU, a pixel string, a pixel group, a pixel microblock and a pixel strip.

In an embodiment, components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41. The component reduction may at least include: a basic operation (X, Y) formed by a cause component X and a result component Y, where a value range of the result component Y may be a subrange Y1 when a value of the cause component X is in a subrange X1, each of X and Y may be one of 1, 2, 3 and 4, and X and Y may be unequal to each other. Multiple basic operations may be combined into a combined operation according to any reasonable logic relationship of cause components of the multiple basic operations; the multiple basic operations may be merged into a merged operation according to any reasonable logic relationship of result components of the multiple basic operations; and multiple combined operations and merged operations may be combined or merged.

In an embodiment, components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41. Other decoding parameters except the copying parameter may at least include: a non-current copying parameter A, a non-current copying parameter B, a non-current copying parameter C and a non-current copying parameter D. Value ranges of the non-current copying parameter A, the non-current copying parameter B, the non-current copying parameter C and the non-current copying parameter D may be a range A, a range B, a range C and a range D respectively. A subrange of the range A may at least include a subrange A1; a subrange of the range B may at least include a subrange B1; a subrange of the range C may at least include a subrange C1; a subrange of the range D may at least include a subrange D1. The component reduction may at least include: a basic operation (X, Y) formed by a cause parameter X and a result component Y of a non-current copying parameter X, where a value range of the result component Y may be a subrange Y1 when a value of the non-current copying parameter X is in a subrange X1, X may be one of A, B, C and D, and Y may be one of 1, 2, 3 and 4. Multiple basic operations may be combined into a combined operation according to any reasonable logic relationship of cause components of the multiple basic operations; the multiple basic operations may be merged into a merged operation according to any reasonable logic relationship of result components of the multiple basic operations; and multiple combined operations and merged operations may be combined or merged.

In an embodiment, components of the copying parameter may at least include the following copying parameter components of a current pixel sample segment: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41. Non-current copying parameters may at least include: a non-current copying parameter A, a non-current copying parameter B, a non-current copying parameter C and a non-current copying parameter D. The non-current copying parameter A may be a combination A of copying parameter components of a previous pixel sample segment of the current pixel sample segment; the non-current copying parameter B may be a combination B of the copying parameter components of the previous pixel sample segment of the current pixel sample segment; the non-current copying parameter C may be a combination C of the copying parameter components of the previous pixel sample segment of the current pixel sample segment; the non-current copying parameter D may be a combination D of the copying parameter components of the previous pixel sample segment of the current pixel sample segment. Value ranges of the non-current copying parameter A, the non-current copying parameter B, the non-current copying parameter C and the non-current copying parameter D may be a range A, a range B, a range C and a range D respectively. A subrange of the range A may at least include a subrange A1; a subrange of the range B may at least include a subrange B1; a subrange of the range C may at least include a subrange C1; a subrange of the range D may at least include a subrange D1. The component reduction may at least include: a basic operation (X, Y) formed by a cause parameter and a result component Y of a non-current copying parameter X, where a value range of the result component Y may be a subrange Y1 when a value of the non-current copying parameter X is in a subrange X1, X may be one of A, B, C and D, and Y may be one of 1, 2, 3 and 4. Multiple basic operations may be combined into a combined operation according to any reasonable logic relationship of cause components of the multiple basic operations; the multiple basic operations may be merged into a merged operation according to any reasonable logic relationship of result components of the multiple basic operations; and multiple combined operations and merged operations may be combined or merged.

In an embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may at least include: a combination of copying parameter components of a previous pixel sample segment of the current pixel sample segment, the combination including a displacement vector horizontal component BV0x, a displacement vector vertical component BV0y and a copying length Len0. Value ranges of the non-current copying parameters may satisfy a following condition: a reference pixel sample segment of the previous pixel sample segment is located in a predetermined reference region. The component reduction may at least include: if values of the copying parameter components BV0x and/or BV0y and/or Len0 of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

In an embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may include at least one of:

a combination of copying parameter components of a previous pixel sample segment of the current pixel sample segment, the combination including a displacement vector horizontal component BV0x, a displacement vector vertical component BV0y and a copying length Len0, where a value range of the combination may satisfy a following condition: a reference pixel sample segment of the previous pixel sample segment is located in a predetermined reference region;

a coordinate of a first pixel of the current pixel sample segment, the coordinate including: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, where Ydelta may be an offset between a vertical-direction component of the coordinate and a vertical component Y1 of a coordinate of the first pixel; a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1, where Xdelta may be an offset between a horizontal-direction component of the coordinate and a horizontal component X1 of a coordinate of the first pixel.

The component reduction may include at least one of:

when BV0x=0 and 1≤BV0y≤Ymax, Ymax being a maximum value of a value range of BV0y, subtracting a first unavailable range from the value range of the combination to obtain value ranges of copying parameters of the current pixel sample segment, where the first unavailable range may be that BVx=0, BVy is equal to BV0y or an integer multiple of BV0y and BVy≤Ydelta; and
when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, where the second unavailable range may be that BVy=0, BVx is equal to BV0x or an integer multiple of BV0x and BVx≤Xdelta.

In an embodiment, when BV0y is equal to 1, the component reduction may include at least one of:

when BV0x=0 and BV0y=1, subtracting a third unavailable range from the value range of the combination to obtain the value ranges of the copying parameters of the current pixel sample segment, where the third unavailable range may be that BVx=0 and 1≤BVy ≤(Ydelta;
when BV0y=0 and BV0x=1, subtracting a fourth unavailable range from the value range of the combination to obtain the value ranges of the copying parameters of the current pixel sample segment, where the fourth unavailable range may be that BVy=0 and 1≤BVx≤Xdelta;
when BV0x=0, BV0y=1 and the copying parameter component BVx of the current pixel sample segment is BVx=0, determining that the value range of the copying parameter component BVy of the current pixel sample segment is: 1≤(BVy-Ydelta)≤(Ymax-Ydelta), where Ymax may be a maximum value of a value range of BVy of the combination, and BVy-Ydelta may be configured for writing into the bitstream after decoding; and
when BV0y=0, BV0x=1 and the copying parameter component BVy of the current pixel sample segment is BVy=0, determining that the value range of the copying parameter component BVx of the current pixel sample segment is: 1≤(BVx-Xdelta)≤(Xmax-Xdelta), where Xmax may be a maximum value of a value range of BVx of the combination, and BVx-Xdelta may be configured for writing into the bitstream after decoding.

In an embodiment, one copying parameter component may correspond to multiple sets of binarization solutions, and there may exist a direct or indirect dedicated binarization mode in a VPS and/or SPS and/or PPS and/or strip header and/or CTU header and/or CU header and/or coding and decoding block header in the bitstream. The dedicated binarization mode may indicate the coding block or decoding block to binarize the copying parameter components by adopting one set in the multiple sets of binarization solutions. The indirect dedicated binarization mode may include at least one of: a binarization mode derived by a depth of the decoding block, a binarization mode derived by a quantization factor of the decoding block, a binarization mode derived by whether to perform quantization on the decoding block or not and a binarization mode derived by whether to perform transformation on the decoding block or not.

In an embodiment, the component replacement may at least include: if a value of a copying parameter component and/or a value of a non-current copying parameter is equal to a predetermined numerical value, performing component replacement on another copying parameter component.

According to another embodiment of the present disclosure, an image coding method is provided, which may include the following acts. A regulation operation may be performed on an original value of a copying parameter of a coding block adopting a copying coding technique to obtain a regulated value of the copying parameter. Coded bits, which are obtained by coding the regulated value, may be written into a bitstream. The regulation operation may include at least one of:

component reduction: reducing, according to numerical values of components of one or more copying parameters, one or more value ranges of one or more components of at least one copying parameter except the one or more copying parameters;
component replacement: replacing part of regions in a one-dimensional, or two-dimensional, or three-dimensional or four-dimensional space formed by one or more numerical values of one or more components of the copying parameter;
component decorrelation: performing an independent or cross decorrelation operation on a component of a copying parameter or components of multiple copying parameters; and
multiset component binarization: selecting, according to numerical values of components of one or more copying parameters, one set from multiple sets of binarization to perform a binarization operation on one or more components of at least one copying parameter except the one or more copying parameters.

In an embodiment, the component reduction may include: determining, according to numerical values of one or more copying parameter components, value ranges to be removed, which does not include the numerical values, within default value ranges of the one or more copying parameter components; and determining value ranges obtained by removing the value ranges to be removed from the default value ranges as value ranges of copying parameter components except the one or more copying parameter components.

In an embodiment, the component replacement may include at least one of: mapping the value ranges, obtained by the component reduction, of the copying parameter components into continuous value ranges; changing plus-minus signs of the copying parameter components; and mapping the value ranges of the copying parameter components into different value ranges.

In an embodiment, the bitstream may be parsed to obtain values of fields corresponding to the one or more components of the copying parameter; and numerical values of one or more components of the regulated reconstructed value of the copying parameter may be set to be difference values or sum values of the values of the obtained corresponding components of the one or more copying parameters and the fields corresponding to the one or more components of the copying parameter.

In an embodiment, the multiset component binarization may include: mapping binarization symbol strings corresponding to the one or more components of the copying parameter in the bitstream into numerical values according to numerical values of the obtained components of one or more copying parameters.

In an embodiment, the method may include that: a coding block may be a coding region of an image, wherein the coding region may include at least one of: an LCU, a CTU, a CU, a sub-region of the CU, a PU, a TU, a pixel string, a pixel group, a pixel micro-block and a pixel strip.

In an embodiment, components of the copying parameter may at least include the following copying parameter components of a current pixel sample segment: a displacement vector horizontal component $BVx$, a displacement vector vertical component $BVy$ and a copying length $Len$. Value ranges of the copying parameter components of the current pixel sample segment may satisfy a following condition: a reference pixel sample segment of the current pixel sample segment is located in a predetermined reference region. Non-current copying parameters may at least include: a combination of copying parameter components of a previous pixel sample segment of the current pixel sample segment, the combination including a displacement vector horizontal component $BV0x$, a displacement vector vertical component $BV0y$ and a copying length $LenO$. Value ranges of the non-current copying parameters may satisfy a following condition: a reference pixel sample segment of the previous pixel sample segment is located in a predetermined reference region.

In an embodiment, the component reduction may at least include: if values of the copying parameter components $BV0x$ and/or $BV0y$ and/or $LenO$ of the previous pixel sample segment indicate that the copying parameter components $BVx$ and/or $BVy$ and/or $Len$ of the current pixel sample segment are forbidden to be valued within a same subrange, subtracting the subrange from the value ranges of the copying parameter components of the current pixel sample segment to obtain the value ranges of the copying parameter components $BVx$ and/or $BVy$ and/or $Len$ of the current pixel sample segment.

In an embodiment, components of the copying parameter may at least include the following copying parameter components of a current pixel sample segment: a displacement vector horizontal component $BVx$, a displacement vector vertical component $BVy$ and a copying length $Len$. Value ranges of the copying parameter components of the current pixel sample segment may satisfy a following condition: a reference pixel sample segment of the current pixel sample segment is located in a predetermined reference region. Non-current copying parameters may include at least one of:

a combination of copying parameter components of a previous pixel sample segment of the current pixel sample segment, the combination including a displacement vector horizontal component $BV0x$, a displacement vector vertical component $BV0y$ and a copying length $LenO$, where a value range of the combination may satisfy a following condition: a reference pixel sample segment of the previous pixel sample segment is located in a predetermined reference region;

a coordinate of a first pixel of the current pixel sample segment, the coordinate including: a horizontal coordinate $X1$ and a vertical coordinate $Y1$;

a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate $X1$ and a vertical coordinate $Y1+Ydelta$, where $Ydelta$ may be an offset between a vertical-direction component of the coordinate and a vertical component $Y1$ of a coordinate of the first pixel; and a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate $X1+Xdelta$ and a vertical coordinate $Y1$, where $Xdelta$ may be an offset between a horizontal-direction component of the coordinate and a horizontal component $X1$ of a coordinate of the first pixel.

In an embodiment, the component reduction may include at least one of:

when BV0x=0 and 1≤BV0y≤Ymax, Ymax being a maximum value of a value range of BV0y, subtracting a first unavailable range from the value range of the combination to obtain value ranges of copying parameters of the current pixel sample segment, where the first unavailable range may be that BVx=0, BVy is equal to BV0y or an integer multiple of BV0y and BVy≤Ydelta; and

when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, where the second unavailable range may be that BVy=0, BVx is equal to BV0x or an integer multiple of BV0x and BVx≤Xdelta.

In an embodiment, when BV0y is equal to 1, the component reduction may include at least one of:

when BV0x=0 and BV0y=1, subtracting a third unavailable range from the value range of the combination to obtain the value ranges of the copying parameters of the current pixel sample segment, where the third unavailable range may be that BVx=0 and 1≤BVy ≤Ydelta;

when BV0y=0 and BV0x=1, subtracting a fourth unavailable range from the value range of the combination to obtain the value ranges of the copying parameters of the current pixel sample segment, where the fourth unavailable range may be that BVy=0 and 1≤BVx≤Xdelta;

when BV0x=0, BV0y=1 and the copying parameter component BVx of the current pixel sample segment is BVx=0, determining that the value range of the copying parameter component BVy of the current pixel sample segment is: 1≤(BVy-Ydelta)≤(Ymax-Ydelta), where Ymax may be a maximum value of a value range of BVy of the combination, and BVy-Ydelta may be configured for writing into the bitstream after coding; and

when BV0y=0, BV0x=1 and the copying parameter component BVy of the current pixel sample segment is BVy=0, determining that the value range of the copying parameter component BVx of the current pixel sample segment is: 1≤(BVx-Xdelta)≤(Xmax-Xdelta), where Xmax may be a maximum value of a value range of BVx of the combination, and BVx-Xdelta may be configured for writing into the bitstream after coding.

According to another embodiment of the present disclosure, an image decoding method is provided, which may include the following acts. A bitstream may be parsed to obtain a decoding parameter of a decoding block, and the decoding parameter may include at least one of the following parameters: a copying parameter of the decoding block and regulation indication information of the copying parameter. A regulation operation may be performed on the copying parameter to obtain a regulated reconstructed value of the copying parameter according to regulation indication information of the copying parameter. The decoding block may be decoded based on the regulated reconstructed value of the copying parameter.

In an embodiment, a manner of performing the regulation operation on the copying parameter to obtain the regulated reconstructed value of the copying parameter may include at least one of:

component reduction: reducing one or more value ranges of one or more components of the copying parameter according to numerical values of obtained components of one or more copying parameters, parsing related fields of the copying parameter in the bitstream within the one or more reduced value ranges, and determining the regulated reconstructed value of the copying parameter;

component replacement: replacing part of regions in a one-dimensional, or two-dimensional, or three-dimensional or four-dimensional space formed by one or more numerical values of one or more components of the copying parameter;

component correlation: parsing, according to numerical values of obtained components of one or more copying parameters, related fields of the copying parameter in the bitstream to determine the regulated reconstructed value of the copying parameter; and

multiset component binarization: parsing related fields of the copying parameter in the bitstream according to numerical values of obtained components of one or more copying parameters, and selecting one set from multiple sets of binarization to map the fields into numerical values of the one or more components of the copying parameter.

In an embodiment, the component reduction may include: determining, according to numerical values of the obtained components of one or more copying parameters, value ranges to be removed, which does not include the numerical values, within default value ranges of the one or more components of the copying parameter; and determining value ranges obtained by removing the value ranges to be removed from the default value ranges as value ranges of the one or more components of the copying parameter except the obtained components of one or more copying parameters.

In an embodiment, the component replacement may include at least one of: mapping the value ranges, obtained by the component reduction, of the one or more components of the copying parameter into continuous value ranges;

changing plus-minus signs of the one or more components of the copying parameter; and mapping the value ranges of the one or more components of the copying parameter into different value ranges.

In an embodiment, the component correlation may include: performing differential operation processing on the copying parameter components.

In an embodiment, the multiset component binarization may include: selecting binarization symbol strings from multiple candidate binarization symbol strings for the components of the copying parameter according to numerical values of components of one or more copying parameters.

In an embodiment, a decoding block may be a decoding region of an image, and the decoding region may include at least one of: an LCU, a CTU, a CU, a sub-region of the CU, a PU, a TU, a pixel string, a pixel group, a pixel micro-block and a pixel strip.

In an embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may at least include: a combination of copying parameter components of a previous pixel sample segment of the current pixel sample segment, the combination including a displacement vector horizontal component BV0x, a displacement vector vertical component BV0y and a copying length LenO. Value ranges of the non-current copying parameters may satisfy a following condition: a reference pixel sample segment of the previous pixel sample segment is located in a predetermined reference region.

In an embodiment, the component reduction may at least include: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

In an embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may include at least one of:

> a combination of copying parameter components of a previous pixel sample segment of the current pixel sample segment, the combination including a displacement vector horizontal component BV0x, a displacement vector vertical component BV0y and a copying length LenO, where a value range of the combination may satisfy a following condition: a reference pixel sample segment of the previous pixel sample segment is located in a predetermined reference region;
> a coordinate of a first pixel of the current pixel sample segment, the coordinate including: a horizontal coordinate X1 and a vertical coordinate Y1;
> a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, where Ydelta may be an offset between a vertical-direction component of the coordinate and a vertical component Y1 of a coordinate of the first pixel; and a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1, where Xdelta may be an offset between a horizontal-direction component of the coordinate and a horizontal component X1 of a coordinate of the first pixel.

In an embodiment, the component reduction may include at least one of:

> when BV0x=0 and 1≤BV0y≤Ymax, Ymax being a maximum value of a value range of BV0y, subtracting a first unavailable range from the value range of the combination to obtain value ranges of copying parameters of the current pixel sample segment, where the first unavailable range may be that BVx=0, BVy is equal to BV0y or an integer multiple of BV0y and BVy≤Ydelta; and
> when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, where the second unavailable range may be that BVy=0, BVx is equal to BV0x or an integer multiple of BV0x and BVx≤Xdelta.

In an embodiment, when BV0y is equal to 1, the component reduction may include at least one of:

when BV0x=0 and BV0y=1, subtracting a third unavailable range from the value range of the combination to obtain the value ranges of the copying parameters of the current pixel sample segment, where the third unavailable range may be that BVx=0 and 1≤BVy ≤(Ydelta;
when BV0y=0 and BV0x=1, subtracting a fourth unavailable range from the value range of the combination to obtain the value ranges of the copying parameters of the current pixel sample segment, where the fourth unavailable range may be that BVy=0 and 1≤BVx≤Xdelta;
when BV0x=0, BV0y=1 and the copying parameter component BVx of the current pixel sample segment is BVx=0, determining that the value range of the copying parameter component BVy of the current pixel sample segment is: 1≤(BVy-Ydelta)≤(Ymax-Ydelta), where Ymax may be a maximum value of a value range of BVy of the combination, and BVy-Ydelta may be configured for writing into the bitstream after decoding; and
when BV0y=0, BV0x=1 and the copying parameter component BVy of the current pixel sample segment is BVy=0, determining that the value range of the copying parameter component BVx of the current pixel sample segment is: 1≤(BVx-Xdelta)≤(Xmax-Xdelta), where Xmax may be a maximum value of a value range of BVx of the combination, and BVx-Xdelta may be configured for writing into the bitstream after decoding.

According to another embodiment of the present disclosure, an image coding apparatus is provided, which may include a first regulation module and a coding processing module. The first regulation module may be configured to perform a regulation operation on an original value of a copying parameter of a coding block adopting a copying coding technique to obtain a regulated value of the copying parameter. The coding processing module may be configured to write coded bits, which are obtained by coding the regulated value, into a bitstream. The regulation operation may include at least one of:

component reduction: reducing, according to numerical values of components of one or more copying parameters, one or more value ranges of one or more components of at least one copying parameter except the one or more copying parameters;
component replacement: replacing part of regions in a one-dimensional, or two-dimensional, or three-dimensional or four-dimensional space formed by one or more numerical values of one or more components of the copying parameter;
component decorrelation: performing an independent or cross decorrelation operation on a component of a copying parameter or components of multiple copying parameters; and
multiset component binarization: selecting, according to numerical values of components of one or more copying parameters, one set from multiple sets of binarization to perform a binarization operation on one or more components of at least one copying parameter except the one or more copying parameters.

According to another embodiment of the present disclosure, an image decoding apparatus is provided, which may include a parsing module, a second regulation module and a decoding processing module. The parsing module may be configured to parse a bitstream to obtain a decoding parameter of a decoding block, and the decoding parameter may include at least one of the following parameters: a copying parameter of the decoding block and regulation indication information of the copying parameter. The second regulation module may be configured to perform a regulation operation on the copying parameter to obtain a regulated reconstructed value of the copying parameter according to regulation indication information of the copying parameter. The decoding processing module may be configured to decode the decoding block based on the regulated reconstructed value of the copying parameter.

In some embodiments of the present disclosure, a regulation operation is performed on an original value of a copying parameter of a coding block adopting a copying coding technique to obtain a regulated value of the copying parameter; and coded bits, which are obtained by coding the regulated value, is written into a bitstream, thereby solving a problem of existence of a redundancy in a numerical value of the copying parameter written into the bitstream in the related technology and achieving an effect of improving coding efficiency.

## Brief Description of the Drawings

The drawings described here are adopted to provide a further understanding to the present disclosure, and form a part of the present disclosure. Schematic embodiments of the present disclosure and descriptions thereof are adopted to explain the present disclosure and not intended to form improper limits to the present disclosure. In the drawings:

Fig. 1 is a first flowchart of an image coding method according to an embodiment of the present disclosure;

Fig. 2 is a first flowchart of an image decoding method according to an embodiment of the present disclosure;

Fig. 3 is a second flowchart of an image coding method according to an embodiment of the present disclosure;

Fig. 4 is a second flowchart of an image decoding method according to an embodiment of the present disclosure;

Fig. 5 is a structure block diagram of an image coding apparatus according to an embodiment of the present disclosure;

Fig. 6 is a structure block diagram of an image decoding apparatus according to an embodiment of the present disclosure; and

Fig. 7 is a schematic diagram of comprehensive regulation of a copying parameter component according to an embodiment of the present disclosure.

## Detailed Description of the Embodiments

The present disclosure will be described below in detail with reference to the drawings and embodiments. It may be appreciated that the embodiments in the present disclosure and characteristics in the embodiments may be combined without conflict.

It may be appreciated that terms "first", "second" and the like in the specification, claims and drawings of the present disclosure are adopted not to describe a specific sequence or order but to distinguish similar objects.

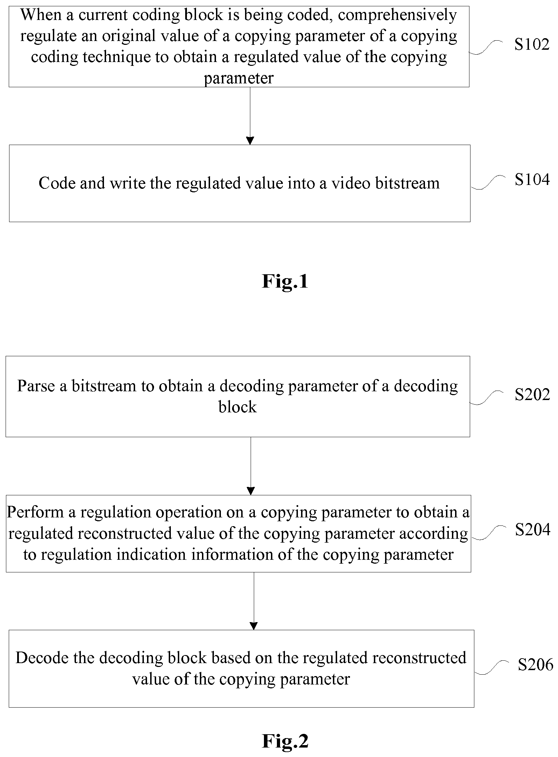

An embodiment provides an image coding method. Fig. 1 is a first flowchart of an image coding method according to an embodiment of the present disclosure. As shown in Fig. 1, the flow may include the following acts.

At act S102, when a current coding block is being coded, an original value of a copying parameter of a copying coding technique may be comprehensively regulated to obtain a regulated value of the copying parameter.

At act S104, the regulated value may be coded and written into a video bitstream.

A comprehensive regulation operation may include at least one of:

component reduction: reducing, according to numerical values of components of one or more copying parameters, one or more value ranges of one or more components of at least one copying parameter except the one or more copying parameters;

component replacement: replacing part of regions in a one-dimensional, or two-dimensional, or three-dimensional or four-dimensional space formed by one or more numerical values of one or more components of the copying parameter;

component decorrelation: performing an independent or cross decorrelation operation on a component of a copying parameter or components of multiple copying parameters; and

multiset component binarization: selecting, according to numerical values of components of one or more copying parameters, one set from multiple sets of binarization to perform a binarization operation on one or more components of at least one copying parameter except the one or more copying parameters.

By act S102 and act S104 of the embodiment of the present disclosure, the regulation operation is performed on the original value of the copying parameter of the coding block adopting the copying coding technique to obtain the regulated value of the copying parameter; and coded bits, which are obtained by coding the regulated value, is further written into the bitstream, thereby solving a problem of existence of a redundancy in a numerical value of the copying parameter written into the bitstream in the related technology and achieving an effect of improving coding efficiency.

It may be appreciated that the coding block in the embodiment may be a coding region of an image. The coding region may include at least one of: an LCU, a CTU, a CU, a sub-region of the CU, a PU, a TU, a pixel string, a pixel group, a pixel micro-block and a pixel strip.

Corresponding descriptions will be made below with reference to a few different situations of the copying parameter components in the embodiment.

A first situation

Components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41.

The component reduction may at least include: a basic operation $(X, Y)$ formed by a cause component $X$ and a result component $Y$, where a value range of the result component $Y$ may be a subrange $Y1$ when a value of the cause component $X$ is in a subrange $X1$, each of $X$ and $Y$ may be one of 1, 2, 3 and 4, and $X$ and $Y$ may be unequal to each other.

Multiple basic operations may be combined into a combined operation according to any reasonable logic relationship of cause components of the multiple basic operations.

The multiple basic operations may be merged into a merged operation according to any reasonable logic relationship of result components of the multiple basic operations.

Multiple combined operations and merged operations may be combined or merged.

A second situation

Components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41.

Other coding parameters except the copying parameter may at least include: a non-current copying parameter A, a non-current copying parameter B, a non-current copying parameter C and a non-current copying parameter D. Value ranges of the non-current copying parameter A, the non-current copying parameter B, the non-current copying parameter C and the non-current copying parameter D may be a range A, a range B, a range C and a range D respectively.

A subrange of the range A may at least include a subrange A1. A subrange of the range B may at least include a subrange B1; a subrange of the range C may at least include a subrange C1; a subrange of the range D may at least include a subrange D1.

The component reduction may at least include: a basic operation (X, Y) formed by a cause parameter X and a result component Y of a non-current copying parameter X,
where a value range of the result component Y may be a subrange Y1 when a value of the non-current copying parameter X is in a subrange X1, X may be one of A, B, C and D, and Y may be one of 1, 2, 3 and 4.

Multiple basic operations may be combined into a combined operation according to any reasonable logic relationship of cause components of the multiple basic operations.

The multiple basic operations may be merged into a merged operation according to any reasonable logic relationship of result components of the multiple basic operations.

Multiple combined operations and merged operations may be combined or merged.

A third situation

Components of the copying parameter may at least include the following copying parameter components of a current pixel sample segment: a component 1, a component 2, a component 3 and a component 4.

Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41.

Non-current copying parameters may at least include: a non-current copying parameter A, a non-current copying parameter B, a non-current copying parameter C and a non-current copying parameter D.

The non-current copying parameter A may be a combination A of copying parameter components of a previous pixel sample segment of the current pixel sample segment; the non-current copying parameter B may be a combination B of the copying parameter components of the previous pixel sample segment of the current pixel sample segment; the non-current copying parameter C may be a combination C of the copying parameter components of the previous pixel sample segment of the current pixel sample segment; the non-current copying parameter D may be a combination D of the copying parameter components of the previous pixel sample segment of the current pixel sample segment.

Value ranges of the non-current copying parameter A, the non-current copying parameter B, the non-current copying parameter C and the non-current copying parameter D may be a range A, a range B, a range C and a range D respectively. A subrange of the range A may at least include a subrange A1; a subrange of the range B may at least include a subrange B1; a subrange of the range C may at least include a subrange C1; a subrange of the range D may at least include a subrange D1.

The component reduction may at least include: a basic operation (X, Y) formed by a cause parameter and a result component Y of a non-current copying parameter X,
where a value range of the result component Y may be a subrange Y1 when a value of the non-current copying parameter X is in a subrange X1, X may be one of A, B, C and D, and Y may be one of 1, 2, 3 and 4.

Multiple basic operations may be combined into a combined operation according to any reasonable logic relationship of cause components of the multiple basic operations.

The multiple basic operations may be merged into a merged operation according to any reasonable logic relationship of result components of the multiple basic operations.

Multiple combined operations and merged operations may be combined or merged.

In another exemplary implementation mode of the embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may at least include: a combination of copying parameter components of a previous pixel sample segment of the current pixel sample segment, the combination including a displacement vector horizontal component BV0x, a displacement vector vertical component BV0y and a copying length LenO. Value ranges of the non-current copying parameters may satisfy a following condition: a reference pixel sample segment of the previous pixel sample segment is located in a predetermined reference region. The component reduction may at least include: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

In the embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may include at least one of:

a combination of copying parameter components of a previous pixel sample segment of the current pixel sample segment, the combination including a displacement vector horizontal component BV0x, a displacement vector vertical component BV0y and a copying length LenO, where a value range of the combination may satisfy a following condition: a reference pixel sample segment of the previous pixel sample segment is located in a predetermined reference region;

a coordinate of a first pixel of the current pixel sample segment, the coordinate including: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, wherein Ydelta may be an offset between a vertical-direction component of the coordinate and a vertical component Y1 of a coordinate of the first pixel; a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1, wherein Xdelta may be an offset between a horizontal-direction component of the coordinate and a horizontal component X1 of a coordinate of the first pixel.

The component reduction may include at least one of:

when BV0x=0 and $1 \leq BV0y \leq Ymax$, Ymax being a maximum value of a value range of BV0y, subtracting a first unavailable range from the value range of the combination to obtain value ranges of copying parameters of the current pixel sample segment, wherein the first unavailable range may be that BVx=0, BVy is equal to BV0y or an integer multiple of BV0y and $BVy \leq Ydelta$; and

when BV0y=0 and $1 \leq BV0x \leq Xmax$, Xmax being a maximum value of a value range of BV0x, subtracting a second unavailable range from the value range of the combination to obtain the value ranges of the copying parameters of the current pixel sample segment, wherein the second unavailable range may be that BVy=0, BVx is equal to BV0x or an integer multiple of BV0x and $BVx \leq Xdelta$.

On such a basis, when BV0y is equal to 1, the component reduction may include at least one of:

when BV0x=0 and BV0y=1, subtracting a third unavailable range from the value range of the combination to obtain the value ranges of the copying parameters of the current pixel sample segment, wherein the third unavailable range may be that BVx=0 and $1 \leq BVy \leq Ydelta$;

when BV0y=0 and BV0x=1, subtracting a fourth unavailable range from the value range of the combination to obtain the value ranges of the copying parameters of the current pixel sample segment, wherein the fourth unavailable range may be that BVy=0 and $1 \leq BVx \leq Xdelta$,

when BV0x=0, BV0y=1 and the copying parameter component BVx of the current pixel sample segment is BVx=0, determining that the value range of the copying parameter component BVy of the current pixel sample segment is: 1≤(BVy-Ydelta)≤(Ymax-Ydelta), wherein Ymax may be a maximum value of a value range of BVy of the combination, and BVy-Ydelta may be written into the bitstream after being coded; and

when BV0y=0, BV0x=1 and the copying parameter component BVy of the current pixel sample segment is BVy=0, determining that the value range of the copying parameter component BVx of the current pixel sample segment is: 1≤(BVx-Xdelta)≤(Xmax-Xdelta), wherein Xmax may be a maximum value of a value range of BVx of the combination, and BVx-Xdelta may be written into the bitstream after being coded.

It may be appreciated that one copying parameter component may correspond to multiple sets of binarization solutions. There may exist a direct or indirect dedicated binarization mode in a VPS and/or SPS and/or PPS and/or strip header and/or CTU header and/or CU header and/or coding and decoding block header in the bitstream. The dedicated binarization mode may indicate the coding block or decoding block to binarize the copying parameter components by adopting one set in the multiple sets of binarization solutions. The indirect dedicated binarization mode may include at least one of: a binarization mode derived by a depth of the coding block, a binarization mode derived by a quantization factor of the coding block, a binarization mode derived by whether to perform quantization on the coding block or not and a binarization mode derived by whether to perform transformation on the coding block or not.

In addition, the component replacement may at least include: if a value of a copying parameter component and/or a value of a non-current copying parameter is equal to a predetermined numerical value, performing component replacement on another copying parameter component.

Fig. 2 is a first flowchart of an image decoding method according to an embodiment of the present disclosure. As shown in Fig. 2, the method may include the following acts.

At act S202, a bitstream may be parsed to obtain a decoding parameter of a decoding block. The decoding parameter may include at least one of the following parameters: a copying parameter of the decoding block and regulation indication information of the copying parameter.

At act S204, a regulation operation may be performed on the copying parameter to obtain a regulated reconstructed value of the copying parameter according to regulation indication information of the copying parameter.

At act S206, the decoding block may be decoded based on the regulated reconstructed value of the copying parameter.

The act of performing the regulation operation on the copying parameter may include at least one of:

component reduction: reducing one or more value ranges of one or more components of the copying parameter according to numerical values of obtained components of one or more copying parameters, parsing related fields of the copying parameter in the bitstream within the one or more reduced value ranges, and determining the regulated reconstructed value of the copying parameter;

component replacement: replacing part of regions in a one-dimensional, or two-dimensional, or three-dimensional or four-dimensional space formed by one or more numerical values of one or more components of the copying parameter;

component correlation: parsing, according to numerical values of obtained components of one or more copying parameters, related fields of the copying parameter in the bitstream to determine the regulated reconstructed value of the copying parameter; and

multiset component binarization: parsing related fields of the copying parameter in the bitstream according to numerical values of obtained components of one or more copying parameters, and selecting one set from multiple sets of binarization to map the fields into numerical values of the one or more components of the copying parameter.

It may be appreciated that a decoding block may be a decoding region of an image, and the decoding region may include at least one of: an LCU, a CTU, a CU, a sub-region of the CU, a PU, a TU, a pixel string, a pixel group, a pixel micro-block and a pixel strip.

Corresponding descriptions will be made below with reference to a few different situations of the copying parameter components in the embodiment.

A first situation

Components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41.

The component reduction may at least include: a basic operation (X, Y) formed by a cause component X and a result component Y, where a value range of the result component Y may be a subrange Y1 when a value of the cause component X is in a subrange X1, each of X and Y may be one of 1, 2, 3 and 4, and X and Y may be unequal to each other.

Multiple basic operations may be combined into a combined operation according to any reasonable logic relationship of cause components of the multiple basic operations.

The multiple basic operations may be merged into a merged operation according to any reasonable logic relationship of result components of the multiple basic operations.

Multiple combined operations and merged operations may be combined or merged.

A second situation

Components of the copying parameter may at least include: a component 1, a component 2, a component 3 and a component 4. Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41.

Other decoding parameters except the copying parameter may at least include: a non-current copying parameter A, a non-current copying parameter B, a non-current copying parameter C and a non-current copying parameter D. Value ranges of the non-current copying parameter A, the non-current copying parameter B, the non-current copying parameter C and the non-current copying parameter D may be a range A, a range B, a range C and a range D respectively.

A subrange of the range A may at least include a subrange A1; a subrange of the range B may at least include a subrange B1; a subrange of the range C may at least include a subrange C1; a subrange of the range D may at least include a subrange D1.

The component reduction may at least include: a basic operation (X, Y) formed by a cause parameter X and a result component Y of a non-current copying parameter X,
where a value range of the result component Y may be a subrange Y1 when a value of the non-current copying parameter X is in a subrange X1, X may be one of A, B, C and D, and Y may be one of 1, 2, 3 and 4.

Multiple basic operations may be combined into a combined operation according to any reasonable logic relationship of cause components of the multiple basic operations.

The multiple basic operations may be merged into a merged operation according to any reasonable logic relationship of result components of the multiple basic operations.

Multiple combined operations and merged operations may be combined or merged.

A third situation:

Components of the copying parameter may at least include the following copying parameter components of a current pixel sample segment: a component 1, a component 2, a component 3 and a component 4.

Value ranges of the component 1, the component 2, the component 3 and the component 4 may be a range 1, a range 2, a range 3 and a range 4 respectively. A subrange of the range 1 may at least include a subrange 11; a subrange of the range 2 may at least include a subrange 21; a subrange of the range 3 may at least include a subrange 31; a subrange of the range 4 may at least include a subrange 41.

Non-current copying parameters may at least include: a non-current copying parameter A, a non-current copying parameter B, a non-current copying parameter C and a non-current copying parameter D.

The non-current copying parameter A may be a combination A of copying parameter components of a previous pixel sample segment of the current pixel sample segment; the non-current copying parameter B may be a combination B of the copying parameter components of the previous pixel sample segment of the current pixel sample segment; the non-current copying parameter C may be a combination C of the copying parameter components of the previous pixel sample segment of the current pixel sample segment; the non-current copying parameter D may be a combination D of the copying parameter components of the previous pixel sample segment of the current pixel sample segment.

Value ranges of the non-current copying parameter A, the non-current copying parameter B, the non-current copying parameter C and the non-current copying parameter D may be a range A, a range B, a range C and a range D respectively. A subrange of the range A may at least include a subrange A1; a subrange of the range B may at least include a subrange B1; a subrange of the range C may at least include a subrange C1; a subrange of the range D may at least include a subrange D1.

The component reduction may at least include: a basic operation (X, Y) formed by a cause parameter and a result component Y of a non-current copying parameter X,
where a value range of the result component Y may be a subrange Y1 when a value of the non-current copying parameter X is in a subrange X1, X may be one of A, B, C and D, and Y may be one of 1, 2, 3 and 4.

Multiple basic operations may be combined into a combined operation according to any reasonable logic relationship of cause components of the multiple basic operations.

The multiple basic operations may be merged into a merged operation according to any reasonable logic relationship of result components of the multiple basic operations.

Multiple combined operations and merged operations may be combined or merged.

In another exemplary implementation mode of the embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may at least include: a combination of copying parameter components of a previous pixel sample segment of the current pixel sample segment, the combination including a displacement vector horizontal component BV0x, a displacement vector vertical component BV0y and a copying length LenO. Value ranges of the non-current copying parameters may satisfy a following condition: a reference pixel sample segment of the previous pixel sample segment is located in a predetermined reference region. The component reduction may at least include: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

In the embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may include at least one of:

a combination of copying parameter components of a previous pixel sample segment of the current pixel sample segment, the combination including a displacement vector horizontal component BV0x, a displacement vector vertical component BV0y and a copying length LenO, where a value range of the combination may satisfy a following condition: a reference pixel sample segment of the previous pixel sample segment is located in a predetermined reference region;

a coordinate of a first pixel of the current pixel sample segment, the coordinate including: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, wherein Ydelta may be an offset between a vertical-direction component of the coordinate and a vertical component Y1 of a coordinate of the first pixel; a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1, wherein Xdelta may be an offset between a horizontal-direction component of the coordinate and a horizontal component X1 of a coordinate of the first pixel.

The component reduction may include at least one of:

when BV0x=0 and 1≤BV0y≤Ymax, Ymax being a maximum value of a value range of BV0y, subtracting a first unavailable range from the value range of the combination to obtain value ranges of copying parameters of the current pixel sample segment, wherein the first unavailable range may be that BVx=0, BVy is equal to BV0y or an integer multiple of BV0y and BVy≤Ydelta; and

when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, wherein the second unavailable range may be that BVy=0, BVx is equal to BV0x or an integer multiple of BV0x and BVx≤Xdelta.

On such a basis, when BV0y is equal to 1, the component reduction may include at least one of:

when BV0x=0 and BV0y=1, subtracting a third unavailable range from the value range of the combination to obtain the value ranges of the copying parameters of the current pixel sample segment, wherein the third unavailable range may be that BVx=0 and 1≤BVy ≤(Ydelta;

when BV0y=0 and BV0x=1, subtracting a fourth unavailable range from the value range of the combination to obtain the value ranges of the copying parameters of the current pixel sample segment, wherein the fourth unavailable range may be that BVy=0 and 1≤BVx≤Xdelta,

when BV0x=0, BV0y=1 and the copying parameter component BVx of the current pixel sample segment is BVx=0, determining that the value range of the copying parameter component BVy of the current pixel sample segment is: 1≤(BVy-Ydelta)≤(Ymax-Ydelta), wherein Ymax may be a maximum value of a value range of BVy of the combination, and BVy-Ydelta may be written into the bitstream after being decoded; and

when BV0y=0, BV0x=1 and the copying parameter component BVy of the current pixel sample segment is BVy=0, determining that the value range of the copying parameter component BVx of the current pixel sample segment is: 1≤(BVx-Xdelta)≤(Xmax-Xdelta), wherein Xmax may be a maximum value of a value range of BVx of the combination, and BVx-Xdelta may be written into the bitstream after being decoded.

It may be appreciated that one copying parameter component may correspond to multiple sets of binarization solutions. There may exist a direct or indirect dedicated binarization mode in a VPS and/or SPS and/or PPS and/or strip header and/or CTU header and/or CU header and/or coding and decoding block header in the bitstream. The dedicated binarization mode may indicate the coding block or decoding block to binarize the copying parameter components by adopting one set in the multiple sets of binarization solutions. The indirect dedicated binarization mode may include at least one of: a binarization mode derived by a depth of the decoding block, a binarization mode derived by a quantization factor of the decoding block, a binarization mode derived by whether to perform quantization on the decoding block or not and a binarization mode derived by whether to perform transformation on the decoding block or not.

In addition, the component replacement may at least include: if a value of a copying parameter component and/or a value of a non-current copying parameter is equal to a predetermined numerical value, performing component replacement on another copying parameter component.

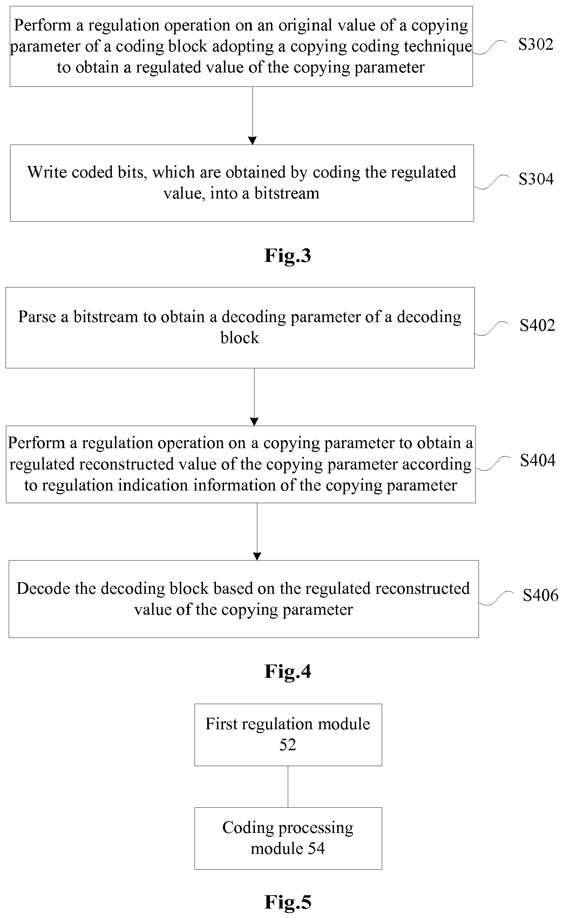

Fig. 3 is a second flowchart of an image coding method according to an embodiment of the present disclosure. As shown in Fig. 3, the method may include the following acts.

At act S302, a regulation operation may be performed on an original value of a copying parameter of a coding block adopting a copying coding technique to obtain a regulated value of the copying parameter.

At act S304, coded bits, which are obtained by coding the regulated value, may be written into a bitstream.

The regulation operation may include at least one of:

component reduction: reducing, according to numerical values of components of one or more copying parameters, one or more value ranges of one or more components of at least one copying parameter except the one or more copying parameters;

component replacement: replacing part of regions in a one-dimensional, or two-dimensional, or three-dimensional or four-dimensional space formed by one or more numerical values of one or more components of the copying parameter;

component decorrelation: performing an independent or cross decorrelation operation on a component of a copying parameter or components of multiple copying parameters; and

multiset component binarization: selecting, according to numerical values of components of one or more copying parameters, one set from multiple sets of binarization to perform a binarization operation on one or more components of at least one copying parameter except the one or more copying parameters.

It may be appreciated that the component reduction in a specific application scenario may include: determining, according to numerical values of one or more copying parameter components, value ranges to be removed, which does not include the numerical values, within default value ranges of the one or more copying parameter components; and determining value ranges obtained by removing the value ranges to be removed from the default value ranges as value ranges of copying parameter components except the one or more copying parameter components.

While the component replacement may include at least one of: mapping the value ranges, obtained by the component reduction, of the copying parameter components into continuous value ranges; changing plus-minus signs of the copying parameter components; and mapping the value ranges of the copying parameter components into different value ranges.

The component decorrelation may include: parsing the bitstream to obtain values of fields corresponding to the one or more components of the copying parameter; and setting numerical values of one or more components of the regulated reconstructed value of the copying parameter to be difference values or sum values of the values of the obtained corresponding components of the one or more copying parameters and the fields corresponding to the one or more components of the copying parameter.

The multiset component binarization may include: mapping binarization symbol strings corresponding to the one or more components of the copying parameter in the bitstream into numerical values according to numerical values of the obtained components of one or more copying parameters.

In addition, a coding block may be a coding region of an image, and the coding region may include at least one of: an LCU, a CTU, a CU, a sub-region of the CU, a PU, a TU, a pixel string, a pixel group, a pixel micro-block and a pixel strip.

In addition, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region.

Non-current copying parameters may at least include: a combination of copying parameter components of a previous pixel sample segment of the current pixel sample segment, the combination including a displacement vector horizontal component BV0x, a displacement vector vertical component BV0y and a copying length LenO. Value ranges of the non-current copying parameters may satisfy a following condition: a reference pixel sample segment of the previous pixel sample segment is located in a predetermined reference region.

In the embodiment, the component reduction may at least include: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

In addition, the copying parameter components may also at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region.

Non-current copying parameters may include at least one of:

a combination of copying parameter components of a previous pixel sample segment of the current pixel sample segment, the combination including a displacement vector horizontal component BV0x, a displacement vector vertical component BV0y and a copying length LenO, where a value range of the combination may satisfy a following condition: a reference pixel sample segment of the previous pixel sample segment is located in a predetermined reference region;

a coordinate of a first pixel of the current pixel sample segment, the coordinate including: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, wherein Ydelta may be an offset between a vertical-direction component of the coordinate and a vertical component Y1 of a coordinate of the first pixel; and a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1, wherein Xdelta may be an offset between a horizontal-direction component of the coordinate and a horizontal component X1 of a coordinate of the first pixel.

On such a basis, the component reduction may include at least one of:

when BV0x=0 and 1≤BV0y≤Ymax, Ymax being a maximum value of a value range of BV0y, subtracting a first unavailable range from the value range of the combination to obtain value ranges of copying parameters of the current pixel sample segment, wherein the first unavailable range may be that BVx=0, BVy is equal to BV0y or an integer multiple of BV0y and BVy≤Ydelta; and

when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, wherein the second unavailable range may be that BVy=0, BVx is equal to BV0x or an integer multiple of BV0x and BVx≤Xdelta.

When BV0y is equal to 1, the component reduction may include at least one of:

when BV0x=0 and BV0y=1, subtracting a third unavailable range from the value range of the combination to obtain the value ranges of the copying parameters of the current pixel sample segment, wherein the third unavailable range may be that BVx=0 and $1 \leq BVy \leq Ydelta$;

when BV0y=0 and BV0x=1, subtracting a fourth unavailable range from the value range of the combination to obtain the value ranges of the copying parameters of the current pixel sample segment, wherein the fourth unavailable range may be that BVy=0 and $1 \leq BVx \leq Xdelta$,

when BV0x=0, BV0y=1 and the copying parameter component BVx of the current pixel sample segment is BVx=0, determining that the value range of the copying parameter component BVy of the current pixel sample segment is: $1 \leq (BVy-Ydelta) \leq (Ymax-Ydelta)$, wherein Ymax may be a maximum value of a value range of BVy of the combination, and BVy-Ydelta may be written into the bitstream after being coded; and

when BV0y=0, BV0x=1 and the copying parameter component BVy of the current pixel sample segment is BVy=0, determining that the value range of the copying parameter component BVx of the current pixel sample segment is: $1 \leq (BVx-Xdelta) \leq (Xmax-Xdelta)$, wherein Xmax may be a maximum value of a value range of BVx of the combination, and BVx-Xdelta m may be written into the bitstream after being coded.

Fig. 4 is a second flowchart of an image decoding method according to an embodiment of the present disclosure. As shown in Fig. 4, the method may include the following acts.

At act S402, a bitstream may be parsed to obtain a decoding parameter of a decoding block. The decoding parameter may include at least one of the following parameters: a copying parameter of the decoding block and regulation indication information of the copying parameter.

At act S404, a regulation operation may be performed on the copying parameter to obtain a regulated reconstructed value of the copying parameter according to regulation indication information of the copying parameter.

At act S406, the decoding block may be decoded based on the regulated reconstructed value of the copying parameter.

In the embodiment, the act of performing the regulation operation on the copying parameter may include at least one of:

component reduction: reducing one or more value ranges of one or more components of the copying parameter according to numerical values of obtained components of one or more copying parameters, parsing related fields of the copying parameter in the bitstream within the one or more reduced value ranges, and determining the regulated reconstructed value of the copying parameter;

component replacement: replacing part of regions in a one-dimensional, or two-dimensional, or three-dimensional or four-dimensional space formed by one or more numerical values of one or more components of the copying parameter;

component correlation: parsing, according to numerical values of obtained components of one or more copying parameters, related fields of the copying parameter in the bitstream to determine the regulated reconstructed value of the copying parameter; and

multiset component binarization: parsing related fields of the copying parameter in the bitstream according to numerical values of obtained components of one or more copying parameters, and selecting one set from multiple sets of binarization to map the fields into numerical values of the one or more components of the copying parameter.

It may be appreciated that the component reduction may include: determining, according to numerical values of the obtained components of one or more copying parameters, value ranges to be removed, which does not include the numerical values, within default value ranges of the one or more components of the copying parameter; and determining value ranges obtained by removing the value ranges to be removed from the default value ranges as value ranges of the one or more components of the copying parameter except the obtained components of one or more copying parameters.

The component replacement may include at least one of: mapping the value ranges, obtained by the component reduction, of the one or more components of the copying parameter into continuous value ranges; changing plus-minus signs of the one or more components of the copying parameter; and mapping the value ranges of the one or more components of the copying parameter into different value ranges.

The component correlation may include: performing differential operation processing on the copying parameter components.

The multiset component binarization may include: selecting binarization symbol strings from multiple candidate binarization symbol strings for the components of the copying parameter according to numerical values of components of one or more copying parameters.

In addition, the decoding block involved in the embodiment may be a decoding region of an image, and the decoding region may include at least one of: an LCU, a CTU, a CU, a sub-region of the CU, a PU, a TU, a pixel string, a pixel group, a pixel micro-block and a pixel strip.

In the embodiment, components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region.

Non-current copying parameters may at least include: a combination of copying parameter components of a previous pixel sample segment of the current pixel sample segment, the combination including a displacement vector horizontal component BV0x, a displacement vector vertical component BV0y and a copying length LenO. Value ranges of the non-current copying parameters may satisfy a following condition: a reference pixel sample segment of the previous pixel sample segment is located in a predetermined reference region.

The component reduction may further at least include: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

Components of the copying parameter may at least include the following copying parameter components of a current pixel sample segment: a displacement vector horizontal component BVx, a displacement vector vertical component BVy and a copying length Len. Value ranges of the copying parameter components of the current pixel sample segment may satisfy a following condition: a reference pixel sample segment of the current pixel sample segment is located in a predetermined reference region. Non-current copying parameters may include at least one of:

a combination of copying parameter components of a previous pixel sample segment of the current pixel sample segment, the combination including a displacement vector horizontal component BV0x, a displacement vector vertical component BV0y and a copying length LenO, where a value range of the combination may satisfy a following condition: a reference pixel sample segment of the previous pixel sample segment is located in a predetermined reference region;

a coordinate of a first pixel of the current pixel sample segment, the coordinate including: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, wherein Ydelta may be an offset between a vertical-direction component of the coordinate and a vertical component Y1 of a coordinate of the first pixel; and a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1, wherein Xdelta may be an offset between a horizontal-direction component of the coordinate and a horizontal component X1 of a coordinate of the first pixel.

In an embodiment, the component reduction may include at least one of:

when BV0x=0 and 1≤BV0y≤Ymax, Ymax being a maximum value of a value range of BV0y, subtracting a first unavailable range from the value range of the combination to obtain value ranges of copying parameters of the current pixel sample segment, wherein the first unavailable range may be that BVx=0, BVy is equal to BV0y or an integer multiple of BV0y and BVy≤Ydelta; and

when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, wherein the second unavailable range may be that BVy=0, BVx is equal to BV0x or an integer multiple of BV0x and BVx≤Xdelta.

In an embodiment, when BV0y is equal to 1, the component reduction may include at least one of:

when BV0x=0 and BV0y=1, subtracting a third unavailable range from the value range of the combination to obtain the value ranges of the copying parameters of the current pixel sample segment, wherein the third unavailable range may be that BVx=0 and 1≤BVy ≤(Ydelta;

when BV0y=0 and BV0x=1, subtracting a fourth unavailable range from the value range of the combination to obtain the value ranges of the copying parameters of the current pixel sample segment, wherein the fourth unavailable range is that BVy=0 and 1≤ ≤BVx≤Xdelta;

when BV0x=0, BV0y=1 and the copying parameter component BVx of the current pixel sample segment is BVx=0, determining that the value range of the copying parameter component BVy of the current pixel sample segment is: 1≤(BVy-Ydelta)≤(Ymax-Ydelta), wherein Ymax may be a maximum value of a value range of BVy of the combination, and BVy-Ydelta may be written into the bitstream after being decoded; and

when BV0y=0, BV0x=1 and the copying parameter component BVy of the current pixel sample segment is BVy=0, determining that the value range of the copying parameter component BVx of the current pixel sample segment is: 1≤(BVx-Xdelta)≤(Xmax-Xdelta), wherein Xmax may be a maximum value of a value range of BVx of the combination, and BVx-Xdelta may be written into the bitstream after being decoded.

From the above descriptions about the implementation modes, those skilled in the art may clearly learn about that the methods of the embodiments may be implemented in a manner of combining software and a universal hardware platform, and of course, may also be implemented through hardware, but the former one is a better implementation mode under many situations. Based on such an understanding, the technical solutions of the present disclosure substantially or parts making contributions to the related technology may be embodied in form of software product, and the computer software product may be stored in a storage medium (such as a Read Only Memory (ROM)/Random Access Memory (RAM), a magnetic disk and an optical disk), including a plurality of instructions configured to enable a piece of terminal equipment (which may be a mobile phone, a computer, a server, network equipment or the like) to execute the method of each embodiment of the present disclosure.

An embodiment provides an image coding apparatus and decoding apparatus. The apparatuses may be configured to implement the abovementioned embodiments and preferred implementation modes, and what has been described will not be elaborated. For example, term "module", used below, may be a combination of software and/or hardware capable of realizing a preset function. Although the apparatuses described in the following embodiment are preferably implemented with software, implementation with hardware or a combination of the software and the hardware is also possible and conceivable.

Fig. 5 is a structure block diagram of an image coding apparatus according to an embodiment of the present disclosure. As shown in Fig. 5, the apparatus may include a first regulation module 52 and a coding processing module 54. The first regulation module 52 may be configured to perform a regulation operation on an original value of a copying parameter of a coding block adopting a copying coding technique to obtain a regulated value of the copying parameter. The coding processing module 54 may be coupled with the first regulation module 52 and configured to write coded bits, which are obtained by coding the regulated value, into a bitstream. The regulation operation may include at least one of:

component reduction: reducing, according to numerical values of components of one or more copying parameters, one or more value ranges of one or more components of at least one copying parameter except the one or more copying parameters;

component replacement: replacing part of regions in a one-dimensional, or two-dimensional, or three-dimensional or four-dimensional space formed by one or more numerical values of one or more components of the copying parameter;

component decorrelation: performing an independent or cross decorrelation operation on a component of a copying parameter or components of multiple copying parameters; and

multiset component binarization: selecting, according to numerical values of components of one or more copying parameters, one set from multiple sets of binarization to perform a binarization operation on one or more components of at least one copying parameter except the one or more copying parameters.

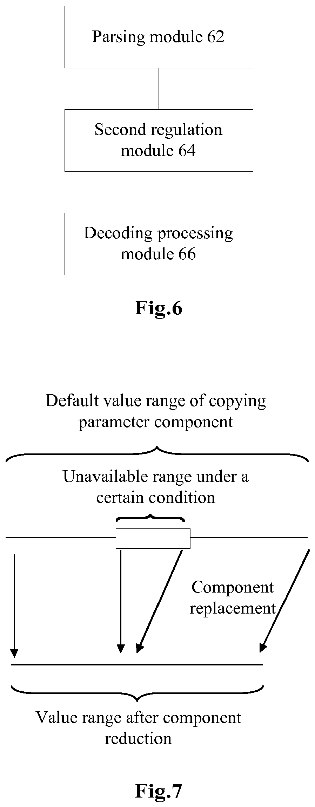

Fig. 6 is a structure block diagram of an image decoding apparatus according to an embodiment of the present disclosure. As shown in Fig. 6, the apparatus may include a parsing module 62, a second regulation module 64 and a decoding processing module 66. The parsing module 62 may be configured to parse a bitstream to obtain a decoding parameter of a decoding block, and the decoding parameter may include at least one of the following parameters: a copying parameter of the decoding block and regulation indication information of the copying parameter. The second regulation module 64 may be coupled with the parsing module 62 and configured to perform a regulation operation on the copying parameter to obtain a regulated reconstructed value of the copying parameter according to regulation indication information of the copying parameter. The decoding processing module 66 may be coupled with the first regulation module 64 and configured to decode the decoding block based on the regulated reconstructed value of the copying parameter.

It may be appreciated that each module may be implemented through software or hardware, and under the latter situation, may be implemented in, but not limited to, the following manner: the modules are all positioned in the same processor, or the modules are positioned in multiple processors respectively.

The present disclosure will be described below with examples with reference to an exemplary embodiment of the present disclosure.

The exemplary embodiment provides image coding and decoding methods for comprehensively regulating a copying parameter before entropy coding to remove a redundancy therein.

It may be appreciated that a block in a block copying technique, a micro-block in a micro-block copying technique, a strip in a strip copying technique, a string in a string copying technique, a rectangle in a rectangular copying technique and a pixel index string in a palette index manner may be collectively called as pixel sample segments, or called as sample segments for short, in the exemplary embodiment. A basic element of a sample segment may be a pixel or a pixel component or a pixel index. One sample segment has one copying parameter for representing a relationship between the current pixel sample segment and a reference pixel sample segment. One copying parameter may include a plurality of copying parameter components. Components of the copying parameter may at least include: a displacement vector horizontal component, a displacement vector vertical component, a copying length, a copying width, a copying height, a rectangle width, a rectangle length and an unmatched pixel (also called as a reference-free pixel, i.e. a non-copying pixel which is not copied from another place).

In a copying coding or copying decoding process, there may be other coding parameters or decoding parameters, besides the copying parameter of the current pixel sample segment. The coding parameters or decoding parameters may at least include: sequence numbers of current and adjacent coding blocks or decoding blocks, various modes, various states, a copying parameter of an adjacent pixel sample segment (prior to the current pixel sample segment) in the current coding block or decoding block, and copying parameters of a plurality of specific sample segments in the adjacent coding block or decoding block. For distinction, various other coding parameters or decoding parameters are collectively called as non-current copying parameters.

In the coding method of the exemplary embodiment, when a current coding block is being coded, an original value of a copying parameter of a copying coding technique may be comprehensively regulated, and a regulated value of the comprehensively regulated copying parameter may be coded and written into a compressed video bitstream (called as a bitstream for short). Comprehensive regulation may include, but not limited to, part or all of the following operations.

Component reduction: according to numerical value(s) of one or more copying parameter components and/or numerical value(s) of other one or more coding parameters (i.e. non-current copying parameters) excluding copying parameters, value range(s) of other one or more copying parameter components are reduced (namely limited). A purpose for performing component reduction is to reduce the number of bits required by coding the other one or more copying parameter components and improve coding efficiency. Fig. 7 is a schematic diagram of comprehensive regulation of a copying parameter component according to an embodiment of the present disclosure. As shown in Fig. 7, means for component reduction may at least include subtracting (removing) an unavailable value range under a certain specific condition (for example, some specific numerical values are adopted for the other components and/or the non-current copying parameters) from default value ranges of the components to obtain value ranges after component reduction.

Component replacement: part of regions in a one-dimensional (one component) or two-dimensional (two components) or three-dimensional (three components) or four-dimensional (four components) space formed by the numerical values of the copying parameter components are replaced. Replacement may include, but not limited to, at least one of transposition of two regions, rotation of part of regions, and point-symmetric, axisymmetric and plane-symmetric exchanging of part of regions. A purpose for performing component replacement is to make a region with a high occurrence frequency correspond to a shorter binarization code in a coding process and improve the coding efficiency. A first example of component replacement is as shown in Fig. 7, component replacement is used together with component reduction, and some separated value subranges after component reduction are replaced to obtain continuous value subranges. A second example of component replacement is to change a plus-minus sign of a component in a value subrange thereof. A third example of component replacement is to replace a value subrange, with a higher occurrence frequency, of a component with a value subrange with a lower occurrence frequency.

Component decorrelation: an independent or cross decorrelation operation is performed on one copying parameter component or multiple copying parameter components. The decorrelation operation may include, but not limited to, a first-order or higher-order differential operation. A purpose for performing component decorrelation is to convert the copying parameter component into a form with a smaller and more concentrated value range and corresponding to a shorter binarization code to improve the coding efficiency.

Multiset component binarization: according to numerical value(s) of one or more copying parameter components and/or numerical values of other coding parameters (i.e. the non-current copying parameters) excluding copying parameters, one set in multiple sets of binarization solutions is selected to perform a binarization operation on other one or more copying parameter components. A purpose for performing multiset component binarization is to select the most effective binarization solution to improve the coding efficiency.

In addition, in the exemplary embodiment, when decoding a current decoding block, a copying parameter may be parsed and acquired from a video bitstream in a comprehensive regulation manner, that is, a regulated value of the copying parameter is parsed and acquired from the bitstream at first, and an original value of the copying parameter is acquired after comprehensive regulation (an inverse operation of a comprehensive regulation operation in the coding method and apparatus). The comprehensive regulation manner may include, but not limited to, part or all of the following operations.

Component reduction: according to numerical value(s) of one or more copying parameter components which have been parsed and acquired and/or numerical value(s) of one or more other decoding parameters (i.e. non-current copying parameters) excluding copying parameters, other one or more copying parameter components are parsed and acquired from reduced (namely limited) value ranges. Regulated values of the copying parameter components are acquired from the bitstream at first, and original values of the copying parameter components are acquired by an inverse operation of the component reduction in the coding method or apparatus. As shown in Fig. 7, means for component reduction may at least include subtracting (removing) an unavailable value range under a certain specific condition (for example, some specific numerical values are adopted for the other components and/or the non-current copying parameters) from default value ranges of the components to obtain the value ranges after component reduction.

Component replacement: part of regions in a one-dimensional (one component) or two-dimensional (two components) or three-dimensional (three components) or four-dimensional (four components) space formed by the numerical values of the copying parameter components are replaced in a process of parsing and acquiring the copying parameter. Replacement may include, but not limited to, at least one of transposition of two regions, rotation of part of regions, and point-symmetric, axisymmetric and plane-symmetric exchanging of part of regions. A first example of component replacement is as shown in Fig. 7, component replacement is used together with component reduction, and some separated value subranges after component reduction are replaced to obtain continuous value subranges. The regulated value of the copying parameter in the replaced continuous value subranges is acquired from the bitstream at first, and the original value of the copying parameter is acquired by component replacement. A second example of component replacement is to change a plus-minus sign of a component in a value subrange thereof. A third example of component replacement is to replace a value subrange, with a higher occurrence frequency, of a component with a value subrange with a lower occurrence frequency.

Component decorrelation: an independent or cross decorrelation operation, i.e. a copying parameter recovery operation, is performed on one copying parameter component or multiple copying parameter components in the process of parsing and acquiring the copying parameter. The recovery operation may include, but not limited to, an inverse operation of a first-order or higher-order differential operation, i.e. a first-order or higher-order summation operation.

Multiset component binarization: according to numerical value(s) of one or more copying parameter components which have been parsed and acquired and/or numerical values of other coding parameters (i.e. the non-current copying parameters) excluding copying parameters, one set in multiple sets of binarization solutions is selected to perform binarization decoding on the other one or more copying parameter components.

In the exemplary embodiment, the copying parameter may include, but not limited to, a displacement vector and/or a copying size and/or a non-copying pixel sample. For string copying, the copying size may include, but not limited to, a copying length. For rectangular copying, the copying size may include, but not limited to, two copying parameter components, i.e. a copying width and a copying length, or two copying parameter components, i.e. a copying height and a copying length, or two copying parameter components, i.e. a copying width and a copying height.

A form of the displacement vector may be a planar (two-dimensional) distance or planar (two-dimensional) coordinate between a first pixel sample of a reference string and/or reference rectangle and/or reference block and/or reference micro-block and/or reference strip in a reconstructed reference pixel sample set and a first pixel sample of a current string and/or current rectangle and/or current block and/or current micro-block and/or current strip in a current coding block or decoding block, or may be a linear (one-dimensional) distance after the pixel samples are linearly arranged according to a scanning manner. The unit of this form of displacement vector may be one sample or a plurality of samples. Another form of the displacement vector may be a two-dimensional (or one-dimensional) address or index in the reconstructed reference pixel sample set or a subset thereof. The unit of this form of displacement vector may be one sample or a plurality of samples. The displacement vector is also called as an intraframe motion vector sometimes.

For string copying and/or rectangular copying, the copying size may be a size of a reference string and/or a reference rectangle, and the unit of the copying size may be one sample or a plurality of samples. The size of the reference string and/or the reference rectangle is also a size of a current string and/or a current rectangle.

It may be appreciated that "reconstructed sample" and "reference sample" are collectively called as "reconstructed reference pixel sample" sometimes in the embodiment. From the context, it is clear that whether a "reconstructed reference pixel sample" represents a "reconstructed sample" or a "reference sample" or represents any one of the two. If such information cannot be clearly determined based on the context, any one of the two is represented.

In addition, "reconstructed reference sample set" and "reconstructed reference pixel sample set" are synonyms, and may also be called as "sample set" for short sometimes without confusion.

The reconstructed reference pixel sample set may be a continuous two-dimensional region including at least one CTU region, and may alternatively be formed by a plurality of unassociated regions or pixels selected according to a predetermined rule.

The reconstructed reference pixel sample set may be divided into a plurality of subsets, and different component arrangement formats, color formats and pixel sample arrangement manners may be adopted for pixels of each subset.

The reconstructed reference pixel sample set may be divided into a plurality of subsets, and pixels of each subset may include completely reconstructed pixels or staged reconstructed pixels which are in respectively peculiar stages of reconstruction of different degrees.

The reconstructed reference pixel sample set may be divided into a plurality of subsets, and each subset may have a different number of pixels, and may be formed by pixel samples with various special properties.

Terms used in the embodiments of the present disclosure may be represented by other physical or mathematical terms. For example, displacement vector may also use one of the following aliases: copying position, matching position, position, distance, relative distance, displacement amount, movement amount, movement vector, motion vector, offset, offset vector, block vector, string vector, compensation amount, compensation, linear address, address, two-dimensional coordinate, one-dimensional coordinate, coordinate, index, exponent and the like. Copying length may also be called as one of the following aliases: copying stroke, copying number, copying count, copying running length, matching stroke, matching number, matching count, matching running length, length, stroke, number, count, running length and the like. String copying may also be called as string matching. Rectangular copying may also be called as rectangular matching and the like.

It may be appreciated that the exemplary embodiment is applicable to coding and decoding of an image in a packed format.

In addition, the exemplary embodiment is also applicable to coding and decoding of an image in a component planar format. When each of pixels of a current coding block or decoding block and pixels of a reconstructed reference pixel sample set is decomposed into three component planes, one component of each of all the pixels forms a plane. Each of a reference block, a reference micro-block, a reference strip, a reference string, a reference rectangle, a current block, a current micro-block, a current strip, a current strip and a current rectangle is decomposed into three component planes. Block copying, micro-block copying, strip copying, string copying and rectangular copying are performed in three planes respectively. However, for reducing copying parameters and also because of great correlation of the three planes, the same copying parameter may be shared by the three planes.

If copying coding and decoding of the image in the component planar format in the exemplary embodiments is applied to a situation of down-sampling over chroma components U and V in a YUV4:2:2 pixel color format, YUV4:2:0 pixel color format and the like, when a copying parameter of a Y plane is applied to a U plane and a V plane, the copying parameter may need to be correspondingly transformed and regulated according to a down-sampling ratio.

The present disclosure will be described below in detail with reference to detailed embodiments of the exemplary embodiment of the present disclosure.


First embodiment


Comprehensive regulation manner 1 (component reduction)


A copying parameter may include, but not limited to, the following copying parameter components: a component 1, a component 2, a component 3 and a component 4, of which value ranges may be a range 1, a range 2, a range 3 and a range 4 respectively. At least one subrange of the range 1 may be a subrange 11. At least one subrange of the range 2 may be a subrange 21. At least one subrange of the range 3 may be a subrange 31. At least one subrange of the range 4 may be a subrange 41.

The component reduction may at least include:

```
if a value of a component X is in a subrange X1,
{
a value range of a component Y is a subrange Y1
},
```

wherein each of X and Y is one of 1, 2, 3 and 4, and X and Y are unequal to each other. Such a limiting (restricting) operation is called as a basic operation (X, Y), wherein the first component X is called as a cause component (cause component), and the second component Y is called as a result component (result component).

A plurality of such basic operations may be combined into a combined operation based on any reasonable logic relationship of the cause components.

A plurality of such basic operations may be freely reasonably merged into a merged operation based on the result components.

A plurality of such combined operations and merged operations may further be combined or merged.

Second embodiment

A plurality of combination examples of basic operations (component reduction)

A first combination is a basic operation (X, Y) "and" a basic operation (Z, Y), and equivalently:

```
    if a value of a component X is in a subrange X1 and a value of a component Z is in a
 subrange Z1,
    {
    a value range of a component Y is a subrange Y1
    },
```

wherein each of X, Y and Z is one of 1, 2, 3 and 4, and X, Y and Z are unequal to one another.
A second combination is the basic operation (X, Y) "or" the basic operation (Z, Y), and equivalently:

```
    if the value of the component X is in the subrange X1 or the value of the component Z
 is in the subrange Z1,
    {
    the value range of the component Y is the subrange Y1
    },
```

wherein each of X, Y and Z is one of 1, 2, 3 and 4, and X, Y and Z are unequal to one another.
A third combination is a basic operation (W, Y) "and" the basic operation (X, Y) "and" the basic operation (Z, Y), and equivalently:

```
    if a value of a component W is in a subrange W1, the value of the component X is in
    the subrange X1 and the value of the component Z is in the subrange Z1,
    {
    the value range of the component Y is the subrange Y1
    },
```

wherein each of W, X, Y and Z is one of 1, 2, 3 and 4, and W, X, Y and Z are unequal to one another.

Third embodiment

A plurality of merging examples of basic operations (component reduction)
A basic operation (X, Y) and a basic operation (X, Z) are merged, and equivalently:

```
    if a value of a component X is in a subrange X1,
    {
    a value range of a component Y is a subrange Y1 and
    a value range of a component Z is a subrange Z1
    },
```

wherein each of X, Y and Z is one of 1, 2, 3 and 4, and X, Y and X are unequal to one another.

Fourth embodiment

Comprehensive regulation manner 2 (component reduction)

A copying parameter may at least include the following copying parameter components: a component 1, a component 2, a component 3 and a component 4, of which value ranges may be a range 1, a range 2, a range 3 and a range 4 respectively. At least one subrange of the range 1 may be a subrange 11. At least one subrange of the range 2 may be a subrange 21. At least one subrange of the range 3 may be a subrange 31. At least one subrange of the range 4 may be a subrange 41.
Other coding or decoding parameters excluding the copying parameter may at least include: a non-current copying parameter A, a non-current copying parameter B, a non-current copying parameter C and a non-current copying parameter D, of which value ranges are a range A, a range B, a range C and a range D respectively. At least one subrange of the range A may be a subrange A1. At least one subrange of the range B may be a subrange B1. At least one subrange of the range C may be a subrange C1. At least one subrange of the range D may be a subrange D1.

The component reduction may at least include that:

```
if a value of a non-current copying parameter X is in a subrange X1,
{
a value range of a component Y is a subrange Y1
},
```

wherein X is one of A, B, C and D, and Y is one of 1, 2, 3 and 4. Such a limiting (restricting) operation is called as a basic operation (X, Y), wherein the non-current copying parameter X is called as a cause parameter (cause parameter), and a component Y is called as a result component (result component).

A plurality of such basic operations may be combined into a combined operation based on any reasonable logic relationship of the cause parameters.

A plurality of such basic operations may be freely reasonably merged into a merged operation based on the result components.

A plurality of such combined operations and merged operations may further be combined or merged.

It may be appreciated that combination and merging of the basic operations in the first embodiment, the second embodiment and the third embodiment may also be applied to the fourth embodiment. The basic operations in the first embodiment and the fourth embodiment may also be combined and merged into more combined operations and merged operations. Such combined operations and merged operations may further be combined and merged. Various such basic operations, combined operations and merged operations may also be synthesized into more complex synthetic operations in any reasonable manner.

Fifth embodiment

Comprehensive regulation manner 3 (component reduction)

A copying parameter may at least include the following copying parameter components of a current pixel sample segment: a component 1, a component 2, a component 3 and a component 4, of which value ranges may be a range 1, a range 2, a range 3 and a range 4 respectively. At least one subrange of the range 1 may be a subrange 11. At least one subrange of the range 2 may be a subrange 21. At least one subrange of the range 3 may be a subrange 31. At least one subrange of the range 4 may be a subrange 41.

Non-current copying parameters may at least include: a combination A, recorded as a non-current copying parameter A, of copying parameter components of a previous pixel sample segment of the current pixel sample segment, a combination B, recorded a non-current copying parameter B, of the copying parameter components of the previous pixel sample segment of the current pixel sample segment, a combination C, recorded as a non-current copying parameter C, of the copying parameter components of the previous pixel sample segment of the current pixel sample segment, and a combination D, recorded as a non-current copying parameter D, of the copying parameter components of the previous pixel sample segment of the current pixel sample segment, of which value ranges are a range A, a range B, a range C and a range D respectively. At least one subrange of the range A may be a subrange A1. At least one subrange of the range B may be a subrange B1. At least one subrange of the range C may be a subrange C1. At least one subrange of the range D may be a subrange D1.

The component reduction may at least include that:

```
if a value of a non-current copying parameter X is in a subrange X1,
{
a value range of a component Y is a subrange Y1
},
```

wherein X is one of A, B, C and D, and Y is one of 1, 2, 3 and 4. Such a limiting (restricting) operation is called as a basic operation (X, Y), wherein the non-current copying parameter X is called as a cause parameter (cause parameter), and a component Y is called as a result component (result component).

A plurality of such basic operations may be combined into a combined operation based on any reasonable logic relationship of the cause parameters.

A plurality of such basic operations may be freely reasonably merged into a merged operation based on the result components.

A plurality of such combined operations and merged operations may further be combined or merged.

Sixth embodiment

Embodiment of comprehensive regulation manner 1 (component reduction)

A copying parameter may include, but not limited to, the following copying parameter components: a displacement vector horizontal component BVx, a displacement vector vertical component BVy and a copying length Len, of which value ranges are (-PicWidth, PicWidth), (-PicHeight, PicHeight) and (0, CuWidth*CuHeight]. Each of BVx and BVy is represented by 1 to 3 syntactic elements:

a first syntactic element for indicating whether the component is zero or not by only one bit;
a second syntactic element for indicating a sign of the component by only one bit; and
a third syntactic element for indicating an absolute value of the component by a variable number of bits.

Other coding or decoding parameters excluding the copying parameter may include, but not limited to: a sequence number NumCTU of a current coding or decoding CTU and a sequence number Zorder of a current coding block or decoding block.
Comprehensive regulation may include part or all of the following operations.
A first operation: if BVx is equal to 0,

```
{
reducing the value range of BVy to be (0, PicHeight), which may eliminate the first
syntactic element and the second syntactic element
}.
```

A second operation: if values of NumCTU and Zorder indicate that the current coding block or decoding block is at a topmost part of an image,

```
{
reducing the value range of BVx to be [0, PicWidth), which may eliminate the second
syntactic element
}.
```

A third operation: if BVx is larger than 0,

```
{
reducing the value range of BVy to be (0, PicHeight), which may eliminate the first
syntactic element and the second syntactic element, and
moreover,
subtracting min(Len+curYinCU, CuHeight)-1 from BVy to obtain new BVy, where
CurYinCu represents vertical displacement of a first pixel sample of a current pixel sample
segment in the current coding block or decoding block,
optionally, Len is always set to be zero
}.
```

A fourth operation, a fifth operation and a sixth operation are dual operations of the first operation, the second operation and the third operation respectively, and y, Y, Height, x and Width therein are changed into x, X, Width, y and Height respectively.
A seventh operation is a synthetic operation of the first operation, the second operation, the third operation, the fourth operation, the fifth operation and the sixth operation.
There is a direct or indirect dedicated bit in a coding block or decoding block header of a bitstream of a coding block or a decoding block,

```
if the dedicated value adopts a value,
{
an operation O and/or an operation P and/or an operation Q are/is executed
}
otherwise, if the dedicated bit adopts another value,
{
an operation R and/or an operation S and/or an operation T are/is executed
},
```

wherein each of O, P, Q, R, S and T is one of 1, 2, 3, 4, 5 and 6, and O, P, Q, R, S and T are unequal to one another. The indirect dedicated bit may be derived in, but not limited to, the following manners: when a scanning mode of the current coding block or decoding block is a horizontal scanning mode, the indirect dedicated bit is set to be a value, otherwise, when the scanning mode of the current coding block or decoding block is a vertical scanning mode, the indirect dedicated bit is set to be another value.

Seventh embodiment

Embodiment 1 of comprehensive regulation manner 3 (component reduction)

A copying parameter may at least include the following copying parameter components of a current pixel sample segment: a displacement vector horizontal component BVx, a displacement vector vertical component BVy and a copying length Len, of which default value ranges may satisfy a following condition: a reference pixel sample segment of the current pixel sample segment is located in a predetermined reference region.

Non-current copying parameters may at least include: a combination of copying parameter components of a previous pixel sample segment of the current pixel sample segment, the combination including a displacement vector horizontal component BV0x, a displacement vector vertical component BV0y and a copying length LenO, of which default value ranges may satisfy a following condition: a reference pixel sample segment of the previous pixel sample segment is located in a predetermined reference region.

The component reduction may at least include:

```
   if values of the copying parameter components BV0x and/or BV0y and/or LenO of the
 previous pixel sample segment indicate that the copying parameter components BVx
 and/or BVy and/or Len of the current pixel sample segment are forbidden to be valued
 within a same subrange,
   {
   Subtracting (removing) the subrange from the default value ranges to obtain the value
 ranges of the copying parameter components BVx and/or BVy and/or Len of the current
 pixel sample segment
   }.
```

Eighth embodiment

Embodiment 2 (special example of above embodiment 1) of comprehensive regulation manner 3 (component reduction)

A copying parameter may at least include the following copying parameter components of a current pixel sample segment: a displacement vector horizontal component BVx, a displacement vector vertical component BVy and a copying length Len, of which default value ranges may satisfy a following condition: a reference pixel sample segment of the current pixel sample segment is located in a predetermined reference region.

Non-current copying parameters may include at least one of:

1) a combination of copying parameter components of a previous pixel sample segment of the current pixel sample segment, the combination including a displacement vector horizontal component BV0x, a displacement vector vertical component BV0y and a copying length LenO, of which default value ranges may satisfy a following condition: a reference pixel sample segment of the previous pixel sample segment is located in a predetermined reference region;

2) a coordinate of a first pixel of the current pixel sample segment, the coordinate including: a horizontal coordinate X1 and a vertical coordinate Y1;

3) a coordinate of a first pixel which is located right above the first pixel of the current pixel sample segment, and belongs neither to the previous pixel sample segment nor to the reference pixel sample segment of the previous pixel sample segment, the coordinate including: a horizontal coordinate X1 and a vertical coordinate Y1+Ydelta, and a coordinate of a first pixel which is located right on the left of the first pixel of the current pixel sample segment, and belongs neither to the previous pixel sample segment nor to the reference pixel sample segment of the previous pixel sample segment, the coordinate including: a horizontal coordinate X1+Xdelta and a vertical coordinate Y1.

The component reduction may include at least one of:

a first operation: if values of copying parameters of the previous pixel sample segment indicate that the previous pixel sample segment is a copy of a pixel sample segment above, that is, BV0x=0 and $1 \leq BV0y \leq Ymax$, Ymax being

a maximum value of the default value range of BV0y,

{ subtracting (removing) the following unavailable range from the default value range to obtain value ranges of copying parameters of the current pixel sample segment:

BVx=0, BVy is equal to BV0y or an integer multiple of BV0y (that is, BVy=k× BV0y, where k is a positive integer) and BVy≤Ydelta;

}

a second operation (dual operation of the first operation): if the values of the copying parameters of the previous pixel sample segment indicate that the previous pixel sample segment is a copy of a left pixel sample segment, that is, BV0y=0 and 1≤BV0x≤Xmax, Xmax being a maximum value of the default value range of BV0x,

{ subtracting (removing) the following unavailable range from the default value range to obtain the value ranges of the copying parameters of the current pixel sample segment:

BVy=0, BVx is equal to BV0x or an integer multiple of BV0x (that is, BVx=k× BV0x, where k is a positive integer) and BVx≤Xdelta;

}.

Ninth embodiment

Embodiment 3 (special example of above embodiment 2) of comprehensive regulation manner 3 (component reduction)

The component reduction may include at least one of the following operations:

a first operation: if values of copying parameters of a previous pixel sample segment indicate that the previous pixel sample segment is a copy of a directly adjacent pixel sample segment above, that is, BV0x=0 and BV0y=1,

{ subtracting (removing) the following unavailable range from a default value range to obtain value ranges of copying parameters of a current pixel sample segment:

$$BVx=0 \text{ and } 1 \leq BVy \leq Ydelta;$$

}.

A second operation (dual operation of the first operation): if the values of the copying parameters of the previous pixel sample segment indicate that the previous pixel sample segment is a copy of a left directly adjacent pixel sample segment, that is, BV0y=0 and BV0x= 1,

```
{
subtracting (removing) the following unavailable range from the default value range to
obtain the value ranges of the copying parameters of the current pixel sample segment:
BVy=0 and 1≤BVx≤Xdelta;
}.
```

Tenth embodiment

Embodiment 4 (equivalent to above embodiment 3) of comprehensive regulation manner 3 (component reduction)

The component reduction may include at least one of the following operations:

a first operation: if values of copying parameters of a previous pixel sample segment indicate that the previous pixel sample segment is a copy of a directly adjacent pixel sample segment above, that is, BV0x=0, BV0y=1 and a copying parameter component BVx of a current pixel sample segment is BVx=0,

{ determining that a value range of a copying parameter component BVy of the current pixel sample segment is:

$1 \leq (BVy-Ydelta) \leq (Ymax-Ydelta)$, wherein Ymax may be a maximum value of a default value range of BVy;

}.

BVy-Ydelta may be coded and written into a bitstream in a coding method; and
BVy-Ydelta may be read from the bitstream and added with Ydelta to obtain BVy in a decoding method.

A second operation (dual operation of the first operation): if the values of the copying parameters of the previous pixel sample segment indicate that the previous pixel sample segment is a copy of a left directly adjacent pixel sample segment, that is, BV0y=0, BV0x=1 and the copying parameter component BVy of the current pixel sample segment is BVy=0,

{ determining that the value range of the copying parameter component BVx of the current pixel sample segment is:

$1 \leq (BVx-Xdelta) \leq (Xmax-Xdelta)$, wherein Xmax may be a maximum value of a default value range of BVx;

}.

BVx-Xdelta may be coded and written into the bitstream in the coding method; and
BVx-Xdelta may be read from the bitstream and added with Xdelta to obtain BVx in a decoding method.
Operations about BVy-Ydelta and BVx-Xdelta in the embodiment are also examples of component replacement over the copying parameter components.

Eleventh embodiment

Comprehensive regulation manner 4 (multiset component binarization)

For a copying parameter component, there is more than one set of binarization solution. There may exist a direct or indirect dedicated binarization mode in a VPS and/or SPS and/or PPS and/or strip header and/or CTU header and/or CU header and/or coding and decoding block header in a bitstream. The dedicated binarization mode refers to that a coding block or decoding block binarizes copying parameter components by adopting one set in multiple sets of binarization solutions.
The indirect dedicated binarization mode may include, but not limited to, at least one or combination of the following manners: a binarization mode derived by a depth of the coding block or decoding block, a binarization mode derived by a quantization factor of the coding block, a binarization mode derived by whether to perform quantization on the coding block or not and a binarization mode derived by whether to perform transformation on the coding block or not.

Twelfth embodiment

Embodiment of comprehensive regulation manner 4 (multiset component binarization)

Four sets of binarization solutions are adopted for a copying length. When a depth of a coding block or a decoding block is 0, 1, 2 and 3, first, second, third and fourth sets of binarization solutions are adopted respectively.
Each set of binarization for the copying length is formed by a prefix and a postfix.
The prefixes of each set of binarization for the copying length are different.
The postfixes of each set of binarization for the copying length are different.
A truncated binary code is adopted for at least one postfix in each set of binarization. Truncated values of the truncated binary codes adopted for each set of binarization are different.

Thirteenth embodiment

Comprehensive regulation manner 5 (component replacement)

An example of a copying parameter may include the following copying parameter components of a current pixel sample segment: a displacement vector horizontal component BVx, a displacement vector vertical component BVy, a copying length Len, and the like.

An example of a non-current copying parameter may include:

1) a scanning manner of a current coding and decoding block;
2) a depth of the current coding and decoding block;
3) a sequence number of the current pixel sample segment in the current coding and decoding block; and
4) a number of pixels which have yet not been coded or decoded in the current coding and decoding block.

The component replacement may at least include:

```
if a copying parameter component and/or a non-current copying parameter is valued
to be predetermined numerical value,
{
performing component replacement on another copying parameter component;
}.
```

Component replacement may be static, may also be dynamic, and for example, is different according to different values of the copying parameter component and/or the non-current copying parameter.

Examples of component replacement:

1) if a copying parameter component and/or a non-current copying parameter is valued to be a predetermined numerical value, a value subrange, with a higher occurrence frequency, of another copying parameter component, is replaced with a value subrange with a lower occurrence frequency;
2) if a copying parameter component of a current pixel sample segment is valued to be within a predetermined subinterval, a predetermined replacement operation, for example, changing a plus-minus number thereof in a value subrange, is performed on another copying parameter component of the current pixel sample segment;
3) dynamic component replacement is performed on a copying length of the current pixel sample segment according to a number of pixels which have yet not been coded or decoded in the current coding and decoding block; and
4) a maximum value and minimum value of the copying length are replaced if a sequence number of the current pixel sample segment in the current coding and decoding block indicates that the pixel sample segment is a first pixel sample segment in the current coding and decoding block.

An embodiment of the present disclosure also provides a storage medium. Optionally, in the embodiment, the storage medium may be configured to store program codes configured to execute the following acts.

At act S1, when a current coding block is being coded, an original value of a copying parameter of a copying coding technique may be comprehensively regulated to obtain a regulated value of the copying parameter.

At act S2, the regulated value may be coded and written into a video bitstream.

In an embodiment, specific examples in the embodiment may refer to examples described in the abovementioned embodiments and exemplary implementation modes, and will not be elaborated in the embodiment.

Obviously, those skilled in the art should know that each module or each act of the present disclosure may be implemented by a universal computing apparatus, and the modules or acts may be concentrated on a single computing apparatus or distributed on a network formed by multiple computing apparatuses, and may optionally be implemented by program codes executable for the computing apparatuses, so that the modules or acts may be stored in a storage apparatus for execution with the computing apparatuses, the shown or described acts may be executed in sequences different from those shown or described here in some circumstances, or may form each integrated circuit module respectively, or multiple modules or acts therein may form a single integrated circuit module for implementation. As a consequence, the present disclosure is not limited to any specific hardware and software combination.

The above is only the preferred embodiment of the present disclosure and not intended to limit the present disclosure. For those skilled in the art, the present disclosure may have various modifications and variations. Any modifications, equivalent replacements, improvements and the like made within the principle of the present disclosure shall fall within the scope of protection defined by the appended claims of the present disclosure.

## Industrial Applicability

In image coding and decoding processes of some embodiments of the present disclosure, the regulation operation is performed on the original value of the copying parameter of the coding block adopting the copying coding technique to obtain the regulated value of the copying parameter; and the coded bit, which is obtained by coding the regulated value, is further written into the bitstream, thereby solving a problem of existence of a redundancy in a numerical value of the copying parameter written into the bitstream in the related technology and achieving an effect of improving coding efficiency.

**Claims**

1. An image coding method, comprising:

   when a current coding block is being coded, comprehensively regulating an original value of a copying parameter of a copying coding technique to obtain a regulated value of the copying parameter; and
   coding and writing the regulated value into a video bitstream,
   wherein a comprehensive regulation operation comprises at least one of:

   component reduction: reducing, according to numerical values of components of one or more copying parameters, one or more value ranges of one or more components of at least one copying parameter except the one or more copying parameters;
   component replacement: replacing part of regions in a one-dimensional, or two-dimensional, or three-dimensional or four-dimensional space formed by one or more numerical values of one or more components of the copying parameter;
   component decorrelation: performing an independent or cross decorrelation operation on a component of a copying parameter or components of multiple copying parameters; and
   multiset component binarization: selecting, according to numerical values of components of one or more copying parameters, one set from multiple sets of binarization to perform a binarization operation on one or more components of at least one copying parameter except the one or more copying parameters.

2. The method as claimed in claim 1, wherein
   a coding block is a coding region of an image, wherein the coding region comprises at least one of: a Largest Coding Unit, LCU, a Coding Tree Unit, CTU, a Coding Unit, CU, a sub-region of the CU, a Prediction Unit, PU, a Transform Unit, TU, a pixel string, a pixel group, a pixel micro-block and a pixel strip.

3. The method as claimed in claim 1, wherein
   components of the copying parameter at least comprise: a component 1, a component 2, a component 3 and a component 4, wherein value ranges of the component 1, the component 2, the component 3 and the component 4 are a range 1, a range 2, a range 3 and a range 4 respectively; a subrange of the range 1 at least comprises a subrange 11; a subrange of the range 2 at least comprises a subrange 21; a subrange of the range 3 at least comprises a subrange 31; a subrange of the range 4 at least comprises a subrange 41;
   the component reduction at least comprises: a basic operation (X, Y) formed by a cause component X and a result component Y, wherein a value range of the result component Y is a subrange Y1 when a value of the cause component X is in a subrange X1, each of X and Y is one of 1, 2, 3 and 4, and X and Y are unequal to each other, wherein multiple basic operations are combined into a combined operation according to any reasonable logic relationship of cause components of the multiple basic operations;
   the multiple basic operations are merged into a merged operation according to any reasonable logic relationship of result components of the multiple basic operations; and
   multiple combined operations and merged operations are combined or merged.

4. The method as claimed in claim 1, wherein
   components of the copying parameter at least comprise: a component 1, a component 2, a component 3 and a component 4, wherein value ranges of the component 1, the component 2, the component 3 and the component 4 are a range 1, a range 2, a range 3 and a range 4 respectively; a subrange of the range 1 at least comprises a subrange 11; a subrange of the range 2 at least comprises a subrange 21; a subrange of the range 3 at least comprises a subrange 31; a subrange of the range 4 at least comprises a subrange 41;
   other coding parameters except the copying parameter at least comprise: a non-current copying parameter A, a non-current copying parameter B, a non-current copying parameter C and a non-current copying parameter D, wherein value ranges of the non-current copying parameter A, the non-current copying parameter B, the non-current copying parameter C and the non-current copying parameter D are a range A, a range B, a range C and a range D respectively;
   a subrange of the range A at least comprises a subrange A1; a subrange of the range B at least comprises a subrange B1; a subrange of the range C at least comprises a subrange C1; a subrange of the range D at least comprises a subrange D1;

the component reduction at least comprises: a basic operation (X, Y) formed by a cause parameter X and a result component Y of a non-current copying parameter X,

wherein a value range of the result component Y is a subrange Y1 when a value of the non-current copying parameter X is in a subrange X1, X is one of A, B, C and D, and Y is one of 1, 2, 3 and 4,

wherein multiple basic operations are combined into a combined operation according to any reasonable logic relationship of cause components of the multiple basic operations;

the multiple basic operations are merged into a merged operation according to any reasonable logic relationship of result components of the multiple basic operations; and

multiple combined operations and merged operations are combined or merged.

5. The method as claimed in claim 1, wherein

components of the copying parameter at least comprise the following copying parameter components of a current pixel sample segment: a component 1, a component 2, a component 3 and a component 4,

wherein value ranges of the component 1, the component 2, the component 3 and the component 4 are a range 1, a range 2, a range 3 and a range 4 respectively; a subrange of the range 1 at least comprises a subrange 11; a subrange of the range 2 at least comprises a subrange 21; a subrange of the range 3 at least comprises a subrange 31; a subrange of the range 4 at least comprises a subrange 41;

non-current copying parameters at least comprise: a non-current copying parameter A, a non-current copying parameter B, a non-current copying parameter C and a non-current copying parameter D,

wherein the non-current copying parameter A is a combination A of copying parameter components of a previous pixel sample segment of the current pixel sample segment; the non-current copying parameter B is a combination B of the copying parameter components of the previous pixel sample segment of the current pixel sample segment; the non-current copying parameter C is a combination C of the copying parameter components of the previous pixel sample segment of the current pixel sample segment; the non-current copying parameter D is a combination D of the copying parameter components of the previous pixel sample segment of the current pixel sample segment;

value ranges of the non-current copying parameter A, the non-current copying parameter B, the non-current copying parameter C and the non-current copying parameter D are a range A, a range B, a range C and a range D respectively; a subrange of the range A at least comprises a subrange A1; a subrange of the range B at least comprises a subrange B1; a subrange of the range C at least comprises a subrange C1; a subrange of the range D at least comprises a subrange D1;

the component reduction at least comprises: a basic operation (X, Y) formed by a cause parameter and a result component Y of a non-current copying parameter X,

wherein a value range of the result component Y is a subrange Y1 when a value of the non-current copying parameter X is in a subrange X1, X is one of A, B, C and D, and Y is one of 1, 2, 3 and 4,

wherein multiple basic operations are combined into a combined operation according to any reasonable logic relationship of cause components of the multiple basic operations;

the multiple basic operations are merged into a merged operation according to any reasonable logic relationship of result components of the multiple basic operations; and

multiple combined operations and merged operations are combined or merged.

6. The method as claimed in claim 1, wherein

components of the copying parameter at least comprise the following copying parameter components of a current pixel sample segment: a displacement vector horizontal component BVx, a displacement vector vertical component BVy and a copying length Len, wherein value ranges of the copying parameter components of the current pixel sample segment satisfy a following condition: a reference pixel sample segment of the current pixel sample segment is located in a predetermined reference region;

non-current copying parameters at least comprise: a combination of copying parameter components of a previous pixel sample segment of the current pixel sample segment, the combination including a displacement vector horizontal component BV0x, a displacement vector vertical component BV0y and a copying length LenO, wherein value ranges of the non-current copying parameters satisfy a following condition: a reference pixel sample segment of the previous pixel sample segment is located in a predetermined reference region; and

the component reduction at least comprises: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

7. The method as claimed in claim 1, wherein
components of the copying parameter at least comprise the following copying parameter components of a current pixel sample segment: a displacement vector horizontal component BVx, a displacement vector vertical component BVy and a copying length Len, wherein value ranges of the copying parameter components of the current pixel sample segment satisfy a following condition: a reference pixel sample segment of the current pixel sample segment is located in a predetermined reference region;
non-current copying parameters comprise at least one of:

a combination of copying parameter components of a previous pixel sample segment of the current pixel sample segment, the combination comprising a displacement vector horizontal component BV0x, a displacement vector vertical component BV0y and a copying length LenO, wherein a value range of the combination satisfies a following condition: a reference pixel sample segment of the previous pixel sample segment is located in a predetermined reference region;
a coordinate of a first pixel of the current pixel sample segment, the coordinate comprising: a horizontal coordinate X1 and a vertical coordinate Y1;
a coordinate of a first pixel which is located right above the first pixel of the current pixel sample segment, and belongs neither to the previous pixel sample segment nor to the reference pixel sample segment of the previous pixel sample segment, the coordinate comprising: a horizontal coordinate X1 and a vertical coordinate Y1+Ydelta, wherein Ydelta is an offset between a vertical-direction component of the coordinate and a vertical component Y1 of a coordinate of the first pixel; a coordinate of a first pixel which is located right on the left of the first pixel of the current pixel sample segment, and belongs neither to the previous pixel sample segment nor to the reference pixel sample segment of the previous pixel sample segment, the coordinate comprising: a horizontal coordinate X1+Xdelta and a vertical coordinate Y1, wherein Xdelta is an offset between a horizontal-direction component of the coordinate and a horizontal component X1 of a coordinate of the first pixel;
the component reduction comprises at least one of:

when $BV0x=0$ and $1 \leq BVOy \leq Ymax$, Ymax being a maximum value of a value range of BV0y, subtracting a first unavailable range from the value range of the combination to obtain value ranges of copying parameters of the current pixel sample segment, wherein the first unavailable range is that BVx=0, BVy is equal to BV0y or an integer multiple of BV0y and $BVy \leq Ydelta$; and
when $BV0y=0$ and $1 \leq BVOx \leq Xmax$, Xmax being a maximum value of a value range of BV0x, subtracting a second unavailable range from the value range of the combination to obtain the value ranges of the copying parameters of the current pixel sample segment, wherein the second unavailable range is that BVy=0, BVx is equal to BV0x or an integer multiple of BV0x and $BVx \leq Xdelta$.

8. The method as claimed in claim 7, wherein
when BV0y is equal to 1, the component reduction comprises at least one of:

when BV0x=0 and BVOy=1, subtracting a third unavailable range from the value range of the combination to obtain the value ranges of the copying parameters of the current pixel sample segment, wherein the third unavailable range is that BVx=0 and $1 \leq BVy \leq Ydelta$;
when BV0y=0 and BVOx=1, subtracting a fourth unavailable range from the value range of the combination to obtain the value ranges of the copying parameters of the current pixel sample segment, wherein the fourth unavailable range is that BVy=0 and $1 \leq BVx \leq Xdelta$;
when BV0x=0, BV0y=1 and the copying parameter component BVx of the current pixel sample segment is BVx=0, determining that the value range of the copying parameter component BVy of the current pixel sample segment is: $1 \leq (BVy-Ydelta) \leq (Ymax-Ydelta)$, wherein Ymax is a maximum value of a value range of BVy of the combination, and BVy-Ydelta is written into the bitstream after being coded; and
when BV0y=0, BV0x=1 and the copying parameter component BVy of the current pixel sample segment is BVy=0, determining that the value range of the copying parameter component BVx of the current pixel sample segment is: $1 \leq (BVx-Xdelta) \leq (Xmax-Xdelta)$, wherein Xmax is a maximum value of a value range of BVx of the combination, and BVx-Xdelta is written into the bitstream after being coded.

9. The method as claimed in claim 1, wherein
one copying parameter component corresponds to multiple sets of binarization solutions, wherein there exists a direct or indirect dedicated binarization mode in a Video Parameter Set, VPS, and/or Sequence Parameter Set, SPS, and/or Picture Parameter Set, PPS, and/or strip header and/or CTU header and/or CU header and/or coding and decoding block header in the bitstream;

the dedicated binarization mode indicates the coding block or decoding block to binarize the copying parameter components by adopting one set in the multiple sets of binarization solutions; and
the indirect dedicated binarization mode comprises at least one of: a binarization mode derived by a depth of the coding block, a binarization mode derived by a quantization factor of the coding block, a binarization mode derived by whether to perform quantization on the coding block or not and a binarization mode derived by whether to perform transformation on the coding block or not.

**10.** The method as claimed in claim 1, wherein
the component replacement at least comprises: if a value of a copying parameter component and/or a value of a non-current copying parameter is equal to a predetermined numerical value, performing component replacement on another copying parameter component.

**11.** An image decoding method, comprising:

parsing a bitstream to obtain a decoding parameter of a decoding block, wherein the decoding parameter comprises at least one of the following parameters: a copying parameter of the decoding block and regulation indication information of the copying parameter;
performing a regulation operation on the copying parameter to obtain a regulated reconstructed value of the copying parameter according to regulation indication information of the copying parameter; and
decoding the decoding block based on the regulated reconstructed value of the copying parameter,
wherein performing the regulation operation on the copying parameter comprises at least one of:

component reduction: reducing one or more value ranges of one or more components of the copying parameter according to numerical values of obtained components of one or more copying parameters, parsing related fields of the copying parameter in the bitstream within the one or more reduced value ranges, and determining the regulated reconstructed value of the copying parameter;
component replacement: replacing part of regions in a one-dimensional, or two-dimensional, or three-dimensional or four-dimensional space formed by one or more numerical values of one or more components of the copying parameter;
component correlation: parsing, according to numerical values of obtained components of one or more copying parameters, related fields of the copying parameter in the bitstream to determine the regulated reconstructed value of the copying parameter; and
multiset component binarization: parsing related fields of the copying parameter in the bitstream according to numerical values of obtained components of one or more copying parameters, and selecting one set from multiple sets of binarization to map the fields into numerical values of the one or more components of the copying parameter.

**12.** The method as claimed in claim 11, wherein
a decoding block is a decoding region of an image, wherein the decoding region comprises at least one of: a Largest Coding Unit, LCU, a Coding Tree Unit, CTU, a Coding Unit, CU, a sub-region of the CU, a Prediction Unit, PU, a Transform Unit, TU, a pixel string, a pixel group, a pixel micro-block and a pixel strip.

**13.** The method as claimed in claim 11, wherein
components of the copying parameter at least comprises: a component 1, a component 2, a component 3 and a component 4, wherein value ranges of the component 1, the component 2, the component 3 and the component 4 are a range 1, a range 2, a range 3 and a range 4 respectively; a subrange of the range 1 at least comprises a subrange 11; a subrange of the range 2 at least comprises a subrange 21; a subrange of the range 3 at least comprises a subrange 31; a subrange of the range 4 at least comprises a subrange 41;
the component reduction at least comprises: a basic operation (X, Y) formed by a cause component X and a result component Y, wherein a value range of the result component Y is a subrange Y1 when a value of the cause component X is in a subrange X1, each of X and Y is one of 1, 2, 3 and 4, and X and Y are unequal to each other, wherein multiple basic operations are combined into a combined operation according to any reasonable logic relationship of cause components of the multiple basic operations;
the multiple basic operations are merged into a merged operation according to any reasonable logic relationship of result components of the multiple basic operations; and
multiple combined operations and merged operations are combined or merged.

**14.** The method as claimed in claim 11, wherein

components of the copying parameter at least comprise: a component 1, a component 2, a component 3 and a component 4, wherein value ranges of the component 1, the component 2, the component 3 and the component 4 are a range 1, a range 2, a range 3 and a range 4 respectively; a subrange of the range 1 at least comprises a subrange 11; a subrange of the range 2 at least comprises a subrange 21; a subrange of the range 3 at least comprises a subrange 31; a subrange of the range 4 at least comprises a subrange 41;

other decoding parameters except the copying parameter at least comprise: a non-current copying parameter A, a non-current copying parameter B, a non-current copying parameter C and a non-current copying parameter D, wherein value ranges of the non-current copying parameter A, the non-current copying parameter B, the non-current copying parameter C and the non-current copying parameter D are a range A, a range B, a range C and a range D respectively;

a subrange of the range A at least comprises a subrange A1; a subrange of the range B at least comprises a subrange B1; a subrange of the range C at least comprises a subrange C1; a subrange of the range D at least comprises a subrange D1;

the component reduction at least comprises: a basic operation (X, Y) formed by a cause parameter X and a result component Y of a non-current copying parameter X,

wherein a value range of the result component Y is a subrange Y1 when a value of the non-current copying parameter X is in a subrange X1, X is one of A, B, C and D, and Y is one of 1, 2, 3 and 4,

wherein multiple basic operations are combined into a combined operation according to any reasonable logic relationship of cause components of the multiple basic operations;

the multiple basic operations are merged into a merged operation according to any reasonable logic relationship of result components of the multiple basic operations; and

multiple combined operations and merged operations are combined or merged.

**15.** The method as claimed in claim 11, wherein

components of the copying parameter at least comprise the following copying parameter components of a current pixel sample segment: a component 1, a component 2, a component 3 and a component 4,

wherein value ranges of the component 1, the component 2, the component 3 and the component 4 are a range 1, a range 2, a range 3 and a range 4 respectively; a subrange of the range 1 at least comprises a subrange 11; a subrange of the range 2 at least comprises a subrange 21; a subrange of the range 3 at least comprises a subrange 31; a subrange of the range 4 at least comprises a subrange 41;

non-current copying parameters at least comprise: a non-current copying parameter A, a non-current copying parameter B, a non-current copying parameter C and a non-current copying parameter D,

wherein the non-current copying parameter A is a combination A of copying parameter components of a previous pixel sample segment of the current pixel sample segment; the non-current copying parameter B is a combination B of the copying parameter components of the previous pixel sample segment of the current pixel sample segment; the non-current copying parameter C is a combination C of the copying parameter components of the previous pixel sample segment of the current pixel sample segment; the non-current copying parameter D is a combination D of the copying parameter components of the previous pixel sample segment of the current pixel sample segment;

value ranges of the non-current copying parameter A, the non-current copying parameter B, the non-current copying parameter C and the non-current copying parameter D are a range A, a range B, a range C and a range D respectively;

a subrange of the range A at least comprises a subrange A1; a subrange of the range B at least comprises a subrange B1; a subrange of the range C at least comprises a subrange C1; a subrange of the range D at least comprises a subrange D1;

the component reduction at least comprises: a basic operation (X, Y) formed by a cause parameter and a result component Y of a non-current copying parameter X,

wherein a value range of the result component Y is a subrange Y1 when a value of the non-current copying parameter X is in a subrange X1, X is one of A, B, C and D, and Y is one of 1, 2, 3 and 4,

wherein multiple basic operations are combined into a combined operation according to any reasonable logic relationship of cause components of the multiple basic operations;

the multiple basic operations are merged into a merged operation according to any reasonable logic relationship of result components of the multiple basic operations; and

multiple combined operations and merged operations are combined or merged.

**16.** The method as claimed in claim 11, wherein

components of the copying parameter at least comprise the following copying parameter components of a current pixel sample segment: a displacement vector horizontal component BVx, a displacement vector vertical component BVy and a copying length Len, wherein value ranges of the copying parameter components of the current pixel sample segment satisfy a following condition: a reference pixel sample segment of the current pixel sample segment is located in a predetermined reference region;

non-current copying parameters at least comprise: a combination of copying parameter components of a previous pixel sample segment of the current pixel sample segment, the combination comprising a displacement vector horizontal component BV0x, a displacement vector vertical component BV0y and a copying length LenO, wherein value ranges of the non-current copying parameters satisfy a following condition: a reference pixel sample segment of the previous pixel sample segment is located in a predetermined reference region; and

the component reduction at least comprises: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

**17.** The method as claimed in claim 11, wherein

components of the copying parameter at least comprise the following copying parameter components of a current pixel sample segment: a displacement vector horizontal component BVx, a displacement vector vertical component BVy and a copying length Len, wherein value ranges of the copying parameter components of the current pixel sample segment satisfy a following condition: a reference pixel sample segment of the current pixel sample segment is located in a predetermined reference region;

non-current copying parameters comprise at least one of:

a combination of copying parameter components of a previous pixel sample segment of the current pixel sample segment, the combination comprising a displacement vector horizontal component BV0x, a displacement vector vertical component BV0y and a copying length LenO, wherein a value range of the combination satisfies a following condition: a reference pixel sample segment of the previous pixel sample segment is located in a predetermined reference region;

a coordinate of a first pixel of the current pixel sample segment, the coordinate comprising: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate comprising: a horizontal coordinate X1 and a vertical coordinate Y1+Ydelta, wherein Ydelta is an offset between a vertical-direction component of the coordinate and a vertical component Y1 of a coordinate of the first pixel; a coordinate of a first pixel which is located right on the left of the first pixel of the current pixel sample segment, and belongs neither to the previous pixel sample segment nor to the reference pixel sample segment of the previous pixel sample segment, the coordinate comprising: a horizontal coordinate X1+Xdelta and a vertical coordinate Y1, wherein Xdelta is an offset between a horizontal-direction component of the coordinate and a horizontal component X1 of a coordinate of the first pixel;

the component reduction comprises at least one of:

when BV0x=0 and $1 \leq BV0y \leq Ymax$, Ymax being a maximum value of a value range of BV0y, subtracting a first unavailable range from the value range of the combination to obtain value ranges of copying parameters of the current pixel sample segment, wherein the first unavailable range is that BVx=0, BVy is equal to BV0y or an integer multiple of BV0y and $BVy \leq Ydelta$; and

when BV0y=0 and $1 \leq BV0x \leq Xmax$, Xmax being a maximum value of a value range of BV0x, subtracting a second unavailable range from the value range of the combination to obtain the value ranges of the copying parameters of the current pixel sample segment, wherein the second unavailable range is that BVy=0, BVx is equal to BV0x or an integer multiple of BV0x and $BVx \leq Xdelta$.

**18.** The method as claimed in claim 17, wherein

when BV0y is equal to 1, the component reduction comprises at least one of:

when BV0x=0 and BV0y=1, subtracting a third unavailable range from the value range of the combination to obtain the value ranges of the copying parameters of the current pixel sample segment, wherein the third unavailable range is that BVx=0 and $1 \leq BVy \leq Ydelta$;

when BV0y=0 and BV0x=1, subtracting a fourth unavailable range from the value range of the combination to obtain the value ranges of the copying parameters of the current pixel sample segment, wherein the fourth unavailable range is that BVy=0 and $1 \leq BVx \leq Xdelta$;

when BV0x=0, BV0y=1 and the copying parameter component BVx of the current pixel sample segment is BVx=0, determining that the value range of the copying parameter component BVy of the current pixel sample segment is: $1 \leq (BVy-Ydelta) \leq (Ymax-Ydelta)$, wherein Ymax is a maximum value of a value range of BVy of the combination, and BVy-Ydelta is written into the bitstream after being decoded; and

when BV0y=0, BV0x=1 and the copying parameter component BVy of the current pixel sample segment is BVy=0, determining that the value range of the copying parameter component BVx of the current pixel sample segment is: $1 \leq (BVx-Xdelta) \leq (Xmax-Xdelta)$, wherein Xmax is a maximum value of a value range of BVx of the combination, and BVx-Xdelta is written into the bitstream after being decoded.

19. The method as claimed in claim 11, wherein

one copying parameter component corresponds to multiple sets of binarization solutions, wherein there exists a direct or indirect dedicated binarization mode in a Video Parameter Set, VPS, and/or Sequence Parameter Set, SPS, and/or Picture Parameter Set, PPS, and/or strip header and/or CTU header and/or CU header and/or coding and decoding block header in the bitstream;

the dedicated binarization mode indicates the coding block or decoding block to binarize the copying parameter components by adopting one set in the multiple sets of binarization solutions; and

the indirect dedicated binarization mode comprises at least one of: a binarization mode derived by a depth of the decoding block, a binarization mode derived by a quantization factor of the decoding block, a binarization mode derived by whether to perform quantization on the decoding block or not and a binarization mode derived by whether to perform transformation on the decoding block or not.

20. The method as claimed in claim 11, wherein

the component replacement at least comprises: if a value of a copying parameter component and/or a value of a non-current copying parameter is equal to a predetermined numerical value, performing component replacement on another copying parameter component.

21. An image coding method, comprising:

performing a regulation operation on an original value of a copying parameter of a coding block adopting a copying coding technique to obtain a regulated value of the copying parameter; and

writing coded bits, which are obtained by coding the regulated value, into a bitstream,

wherein the regulation operation comprises at least one of:

component reduction: reducing, according to numerical values of components of one or more copying parameters, one or more value ranges of one or more components of at least one copying parameter except the one or more copying parameters;

component replacement: replacing part of regions in a one-dimensional, or two-dimensional, or three-dimensional or four-dimensional space formed by one or more numerical values of one or more components of the copying parameter;

component decorrelation: performing an independent or cross decorrelation operation on a component of a copying parameter or components of multiple copying parameters; and

multiset component binarization: selecting, according to numerical values of components of one or more copying parameters, one set from multiple sets of binarization to perform a binarization operation on one or more components of at least one copying parameter except the one or more copying parameters.

22. The method as claimed in claim 21, wherein the component reduction comprises:

determining, according to numerical values of one or more copying parameter components, value ranges to be removed, which does not include the numerical values, within default value ranges of the one or more copying parameter components; and

determining value ranges obtained by removing the value ranges to be removed from the default value ranges as value ranges of copying parameter components except the one or more copying parameter components.

23. The method as claimed in claim 21, wherein the component replacement comprises at least one of:

mapping the value ranges, obtained by the component reduction, of the copying parameter components into continuous value ranges;

changing plus-minus signs of the copying parameter components; and

mapping the value ranges of the copying parameter components into different value ranges.

**24.** The method as claimed in claim 21, wherein the component decorrelation comprises:

performing differential operation processing on the copying parameter components.

**25.** The method as claimed in claim 21, wherein the multiset component binarization comprises:

selecting, according to numerical values of the components of one or more copying parameters, corresponding binarization symbol strings from multiple candidate binarization symbol strings for the components of the one or more copying parameters.

**26.** The method as claimed in claim 21, wherein
a coding block is a coding region of an image, wherein the coding region comprises at least one of: a Largest Coding Unit, LCU, a Coding Tree Unit, CTU, a Coding Unit, CU, a sub-region of the CU, a Prediction Unit, PU, a Transform Unit, TU, a pixel string, a pixel group, a pixel micro-block and a pixel strip.

**27.** The method as claimed in claim 21, wherein
components of the copying parameter at least comprise the following copying parameter components of a current pixel sample segment: a displacement vector horizontal component $BVx$, a displacement vector vertical component $BVy$ and a copying length $Len$, wherein value ranges of the copying parameter components of the current pixel sample segment satisfy a following condition: a reference pixel sample segment of the current pixel sample segment is located in a predetermined reference region; and
non-current copying parameters at least comprise: a combination of copying parameter components of a previous pixel sample segment of the current pixel sample segment, the combination comprising a displacement vector horizontal component $BV0x$, a displacement vector vertical component $BV0y$ and a copying length $LenO$, wherein value ranges of the non-current copying parameters satisfy a following condition: a reference pixel sample segment of the previous pixel sample segment is located in a predetermined reference region.

**28.** The method as claimed in claim 27, wherein
the component reduction at least comprises: if values of the copying parameter components $BV0x$ and/or $BV0y$ and/or $LenO$ of the previous pixel sample segment indicate that the copying parameter components $BVx$ and/or $BVy$ and/or $Len$ of the current pixel sample segment are forbidden to be valued within a same subrange, subtracting the subrange from the value ranges of the copying parameter components of the current pixel sample segment to obtain the value ranges of the copying parameter components $BVx$ and/or $BVy$ and/or $Len$ of the current pixel sample segment.

**29.** The method as claimed in claim 21, wherein
components of the copying parameter at least comprise the following copying parameter components of a current pixel sample segment: a displacement vector horizontal component $BVx$, a displacement vector vertical component $BVy$ and a copying length $Len$, wherein value ranges of the copying parameter components of the current pixel sample segment satisfy a following condition: a reference pixel sample segment of the current pixel sample segment is located in a predetermined reference region;
non-current copying parameters comprise at least one of:

a combination of copying parameter components of a previous pixel sample segment of the current pixel sample segment, the combination comprising a displacement vector horizontal component $BV0x$, a displacement vector vertical component $BV0y$ and a copying length $LenO$, wherein a value range of the combination satisfies a following condition: a reference pixel sample segment of the previous pixel sample segment is located in a predetermined reference region;
a coordinate of a first pixel of the current pixel sample segment, the coordinate comprising: a horizontal coordinate $X1$ and a vertical coordinate $Y1$;
a coordinate of a first pixel which is located right above the first pixel of the current pixel sample segment, and belongs neither to the previous pixel sample segment nor to the reference pixel sample segment of the previous pixel sample segment, the coordinate comprising: a horizontal coordinate $X1$ and a vertical coordinate $Y1+Ydelta$, wherein $Ydelta$ is an offset between a vertical-direction component of the coordinate and a vertical component $Y1$ of a coordinate of the first pixel; and a coordinate of a first pixel which is located right on the left of the first pixel of the current pixel sample segment, and belongs neither to the previous pixel sample segment nor to the reference pixel sample segment of the previous pixel sample segment, the coordinate comprising: a horizontal coordinate $X1+Xdelta$ and a vertical coordinate $Y1$, wherein $Xdelta$ is an offset between a horizontal-direction component of the coordinate and a horizontal component X1 of a coordinate of the first pixel.

30. The method as claimed in claim 29, wherein
    the component reduction comprises at least one of:

    when BV0x=0 and 1 ≤BV0y≤Ymax, Ymax being a maximum value of a value range of BV0y, subtracting a first unavailable range from the value range of the combination to obtain value ranges of copying parameters of the current pixel sample segment, wherein the first unavailable range is that BVx=0, BVy is equal to BV0y or an integer multiple of BV0y and BVy≤Ydelta; and
    when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, wherein the second unavailable range is that BVy=0, BVx is equal to BV0x or an integer multiple of BV0x and BVx≤Xdelta.

31. The method as claimed in claim 29, wherein
    when BV0y is equal to 1, the component reduction comprises at least one of:

    when BV0x=0 and BVOy=1, subtracting a third unavailable range from the value range of the combination to obtain the value ranges of the copying parameters of the current pixel sample segment, wherein the third unavailable range is that BVx=0 and 1≤BVy≤ Ydelta;
    when BV0y=0 and BVOx=1, subtracting a fourth unavailable range from the value range of the combination to obtain the value ranges of the copying parameters of the current pixel sample segment, wherein the fourth unavailable range is that BVy=0 and 1≤ BVx≤Xdelta;
    when BV0x=0, BV0y=1 and the copying parameter component BVx of the current pixel sample segment is BVx=0, determining that the value range of the copying parameter component BVy of the current pixel sample segment is: 1 ≤(BVy-Ydelta)≤(Ymax-Ydelta), wherein Ymax is a maximum value of a value range of BVy of the combination, and BVy-Ydelta is written into the bitstream after being coded; and
    when BV0y=0, BV0x=1 and the copying parameter component BVy of the current pixel sample segment is BVy=0, determining that the value range of the copying parameter component BVx of the current pixel sample segment is: 1 ≤(BVx-Xdelta)≤(Xmax-Xdelta), wherein Xmax is a maximum value of a value range of BVx of the combination, and BVx-Xdelta is written into the bitstream after being coded.

32. An image decoding method, comprising:

    parsing a bitstream to obtain a decoding parameter of a decoding block, wherein the decoding parameter comprises at least one of the following parameters: a copying parameter of the decoding block and regulation indication information of the copying parameter;
    performing a regulation operation on the copying parameter to obtain a regulated reconstructed value of the copying parameter according to regulation indication information of the copying parameter; and
    decoding the decoding block based on the regulated reconstructed value of the copying parameter.

33. The method as claimed in claim 32, wherein a manner of performing the regulation operation on the copying parameter to obtain the regulated reconstructed value of the copying parameter comprises at least one of:

    component reduction: reducing one or more value ranges of one or more components of the copying parameter according to numerical values of obtained components of one or more copying parameters, parsing related fields of the copying parameter in the bitstream within the one or more reduced value ranges, and determining the regulated reconstructed value of the copying parameter;
    component replacement: replacing part of regions in a one-dimensional, or two-dimensional, or three-dimensional or four-dimensional space formed by one or more numerical values of the one or more components of the copying parameter;
    component correlation: parsing, according to numerical values of obtained components of one or more copying parameters, related fields of the copying parameter in the bitstream to determine the regulated reconstructed value of the copying parameter; and
    multiset component binarization: parsing related fields of the copying parameter in the bitstream according to numerical values of obtained components of one or more copying parameters, and selecting one set from multiple sets of binarization to map the fields into numerical values of the one or more components of the copying parameter.

**34.** The method as claimed in claim 33, wherein the component reduction comprises:

determining, according to numerical values of the obtained components of one or more copying parameters, value ranges to be removed, which does not include the numerical values, within default value ranges of the one or more components of the copying parameter; and

determining value ranges obtained by removing the value ranges to be removed from the default value ranges as value ranges of the one or more components of the copying parameter except the obtained components of one or more copying parameters.

**35.** The method as claimed in claim 33, wherein the component replacement comprises at least one of:

mapping the value ranges, obtained by the component reduction, of the one or more components of the copying parameter into continuous value ranges;

changing plus-minus signs of the one or more components of the copying parameter; and

mapping the value ranges of the one or more components of the copying parameter into different value ranges.

**36.** The method as claimed in claim 33, wherein the component correlation comprises:

parsing the bitstream to obtain values of fields corresponding to the one or more components of the copying parameter; and

setting numerical values of one or more components of the regulated reconstructed value of the copying parameter to be difference values or sum values of the values of the obtained corresponding components of the one or more copying parameters and the fields corresponding to the one or more components of the copying parameter.

**37.** The method as claimed in claim 33, wherein the multiset component binarization comprises:

mapping binarization symbol strings corresponding to the one or more components of the copying parameter in the bitstream into numerical values according to numerical values of the obtained components of one or more copying parameters.

**38.** The method as claimed in claim 32, comprising that:

a decoding block is a decoding region of an image, wherein the decoding region comprises at least one of: a Largest Coding Unit, LCU, a Coding Tree Unit, CTU, a Coding Unit, CU, a sub-region of the CU, a Prediction Unit, PU, a Transform Unit, TU, a pixel string, a pixel group, a pixel micro-block and a pixel strip.

**39.** The method as claimed in claim 32, wherein components of the copying parameter at least comprise the following copying parameter components of a current pixel sample segment: a displacement vector horizontal component BVx, a displacement vector vertical component BVy and a copying length Len, wherein value ranges of the copying parameter components of the current pixel sample segment satisfy a following condition: a reference pixel sample segment of the current pixel sample segment is located in a predetermined reference region; and

non-current copying parameters at least comprise: a combination of copying parameter components of a previous pixel sample segment of the current pixel sample segment, the combination comprising a displacement vector horizontal component BV0x, a displacement vector vertical component BV0y and a copying length LenO, wherein value ranges of the non-current copying parameters satisfy a following condition: a reference pixel sample segment of the previous pixel sample segment is located in a predetermined reference region.

**40.** The method as claimed in claim 39, wherein the component reduction at least comprises: if values of the copying parameter components BV0x and/or BV0y and/or LenO of the previous pixel sample segment indicate that the copying parameter components BVx and/or BVy and/or Len of the current pixel sample segment are forbidden to be valued within a same subrange, subtracting the subrange from the value ranges of the copying parameter components of the current pixel sample segment to obtain the value ranges of the copying parameter components BVx and/or BVy and/or Len of the current pixel sample segment.

**41.** The method as claimed in claim 32, wherein

components of the copying parameter at least comprise the following copying parameter components of a current pixel sample segment: a displacement vector horizontal component BVx, a displacement vector vertical component BVy and a copying length Len, wherein value ranges of the copying parameter components of the current pixel sample segment satisfy a following condition: a reference pixel sample segment of the current pixel sample segment is located in a predetermined reference region;

non-current copying parameters comprise at least one of:

a combination of copying parameter components of a previous pixel sample segment of the current pixel sample segment, the combination comprising a displacement vector horizontal component BV0x, a displacement vector vertical component BV0y and a copying length LenO, wherein a value range of the combination satisfies a following condition: a reference pixel sample segment of the previous pixel sample segment is located in a predetermined reference region;

a coordinate of a first pixel of the current pixel sample segment, the coordinate comprising: a horizontal coordinate X1 and a vertical coordinate Y1;

a coordinate of a first pixel which is located right above the first pixel of the current pixel sample segment, and belongs neither to the previous pixel sample segment nor to the reference pixel sample segment of the previous pixel sample segment, the coordinate comprising: a horizontal coordinate X1 and a vertical coordinate Y1+Ydelta, wherein Ydelta is an offset between a vertical-direction component of the coordinate and a vertical component Y1 of a coordinate of the first pixel; and a coordinate of a first pixel which is located right on the left of the first pixel of the current pixel sample segment, and belongs neither to the previous pixel sample segment nor to the reference pixel sample segment of the previous pixel sample segment, the coordinate comprising: a horizontal coordinate X1+Xdelta and a vertical coordinate Y1, wherein Xdelta is an offset between a horizontal-direction component of the coordinate and a horizontal component X1 of a coordinate of the first pixel.

42. The method as claimed in claim 41, wherein
the component reduction comprises at least one of:

when BV0x=0 and 1≤BV0y≤Ymax, Ymax being a maximum value of a value range of BV0y, subtracting a first unavailable range from the value range of the combination to obtain value ranges of copying parameters of the current pixel sample segment, wherein the first unavailable range is that BVx=0, BVy is equal to BV0y or an integer multiple of BV0y and BVy≤Ydelta; and

when BV0y=0 and 1≤BV0x≤Xmax, Xmax being a maximum value of a value range of BV0x, subtracting a second unavailable range from the value range of the combination to obtain the value ranges of the copying parameters of the current pixel sample segment, wherein the second unavailable range is that BVy=0, BVx is equal to BV0x or an integer multiple of BV0x and BVx≤Xdelta.

43. The method as claimed in claim 41, wherein
when BV0y is equal to 1, the component reduction comprises at least one of:

when BV0x=0 and BVOy=1, subtracting a third unavailable range from the value range of the combination to obtain the value ranges of the copying parameters of the current pixel sample segment, wherein the third unavailable range is that BVx=0 and 1≤BVy≤ Ydelta;

when BV0y=0 and BVOx=1, subtracting a fourth unavailable range from the value range of the combination to obtain the value ranges of the copying parameters of the current pixel sample segment, wherein the fourth unavailable range is that BVy=0 and 1≤ BVx≤Xdelta;

when BV0x=0, BV0y=1 and the copying parameter component BVx of the current pixel sample segment is BVx=0, determining that the value range of the copying parameter component BVy of the current pixel sample segment is: 1 ≤(BVy-Ydelta)≤(Ymax-Ydelta), wherein Ymax is a maximum value of a value range of BVy of the combination, and BVy-Ydelta is written into the bitstream after being decoded; and

when BV0y=0, BV0x=1 and the copying parameter component BVy of the current pixel sample segment is BVy=0, determining that the value range of the copying parameter component BVx of the current pixel sample segment is: 1 ≤(BVx-Xdelta)≤(Xmax-Xdelta), wherein Xmax is a maximum value of a value range of BVx of the combination, and BVx-Xdelta is written into the bitstream after being decoded.

44. An image coding apparatus, comprising:

a first regulation module, configured to perform a regulation operation on an original value of a copying parameter of a coding block adopting a copying coding technique to obtain a regulated value of the copying parameter; and

a coding processing module, configured to write coded bits, which are obtained by coding the regulated value, into a bitstream,
wherein the regulation operation comprises at least one of:

component reduction: reducing, according to numerical values of components of one or more copying parameters, one or more value ranges of one or more components of at least one copying parameter except the one or more copying parameters;
component replacement: replacing part of regions in a one-dimensional, or two-dimensional, or three-dimensional or four-dimensional space formed by one or more numerical values of one or more components of the copying parameter;
component decorrelation: performing an independent or cross decorrelation operation on a component of a copying parameter or components of multiple copying parameters; and
multiset component binarization: selecting, according to numerical values of components of one or more copying parameters, one set from multiple sets of binarization to perform a binarization operation on one or more components of at least one copying parameter except the one or more copying parameters.

**45.** An image decoding apparatus, comprising:

a parsing module, configured to parse a bitstream to obtain a decoding parameter of a decoding block, wherein the decoding parameter comprises at least one of the following parameters: a copying parameter of the decoding block and regulation indication information of the copying parameter;
a second regulation module, configured to perform a regulation operation on the copying parameter to obtain a regulated reconstructed value of the copying parameter according to regulation indication information of the copying parameter; and
a decoding processing module, configured to decode the decoding block based on the regulated reconstructed value of the copying parameter.

When a current coding block is being coded, comprehensively regulate an original value of a copying parameter of a copying coding technique to obtain a regulated value of the copying parameter — S102

Code and write the regulated value into a video bitstream — S104

**Fig.1**

Parse a bitstream to obtain a decoding parameter of a decoding block — S202

Perform a regulation operation on a copying parameter to obtain a regulated reconstructed value of the copying parameter according to regulation indication information of the copying parameter — S204

Decode the decoding block based on the regulated reconstructed value of the copying parameter — S206

**Fig.2**

Perform a regulation operation on an original value of a copying parameter of a coding block adopting a copying coding technique to obtain a regulated value of the copying parameter —— S302

Write coded bits, which are obtained by coding the regulated value, into a bitstream —— S304

**Fig.3**

Parse a bitstream to obtain a decoding parameter of a decoding block —— S402

Perform a regulation operation on a copying parameter to obtain a regulated reconstructed value of the copying parameter according to regulation indication information of the copying parameter —— S404

Decode the decoding block based on the regulated reconstructed value of the copying parameter —— S406

**Fig.4**

First regulation module 52

Coding processing module 54

**Fig.5**

Parsing module 62

Second regulation
module 64

Decoding processing
module 66

**Fig.6**

Default value range of copying
parameter component

Unavailable range under a
certain condition

Component
replacement

Value range after component
reduction

**Fig.7**

| INTERNATIONAL SEARCH REPORT | International application No. |
|---|---|
| | PCT/CN2016/072790 |

**A. CLASSIFICATION OF SUBJECT MATTER**

H04N 19/51 (2014.01) i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, EPODOC, WPI, IEEE: mark, TONGJI UNIVERSITY, referenc+, cop+, match+, block?, parameter?, information, modif+, adjust+, id, identif+, symbol?, indicat+, screen content, screen imag+, +cod+, +compress+

**C. DOCUMENTS CONSIDERED TO BE RELEVANT**

| Category* | Citation of document, with indication, where appropriate, of the relevant passages | Relevant to claim No. |
|---|---|---|
| A | WO 2014052249 A1 (MICROSOFT CORPORATION), 03 April 2014 (03.04.2014), description, paragraphs 0006-0007 and 0011 | 1-45 |
| A | CN 103370935 A (SONY CORP.), 23 October 2013 (23.10.2013), description, paragraphs 0017-0018 and 0114-0120 | 1-45 |
| A | CN 103959776 A (SAMSUNG ELECTRONICS CO., LTD.), 30 July 2014 (30.07.2014), description, paragraphs 0007 and 0036-0048 | 1-45 |
| A | CN 104244007 A (SHANGHAI TIANHE ELECTRONIC INFORMATION CO., LTD.), 24 December 2014 (24.12.2014), the whole document | 1-45 |
| A | EP 2424240 A2 (LG ELECTRONICS INC.), 29 February 2012 (29.02.2012), the whole document | 1-45 |
| A | CN 103561270 A (WUHAN UNIVERSITY), 05 February 2014 (05.02.2014), the whole document | 1-45 |

☒ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 March 2016 (18.03.2016) | 26 April 2016 (26.04.2016) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer XIE, Jiani Telephone No.: (86-10) 82245062 |
|---|---|

Form PCT/ISA/210 (second sheet) (July 2009)

## INTERNATIONAL SEARCH REPORT

| International application No. |
|---|
| PCT/CN2016/072790 |

**C (Continuation).      DOCUMENTS CONSIDERED TO BE RELEVANT**

| Category* | Citation of document, with indication, where appropriate, of the relevant passages | Relevant to claim No. |
|---|---|---|
| A | ZHANG, Peijun et al., "Screen Content Coding By Combined Full-Chroma LZMA And Subsampled-Chroma HEVC", JOURNAL OF ELECTRONICS & INFORMATION TECHNOLOGY, vol. 35, no. 1, 31 January 2013 (31.01.2013), the whole document | 1-45 |

Form PCT/ISA/210 (continuation of second sheet) (July 2009)

# INTERNATIONAL SEARCH REPORT
## Information on patent family members

| | International application No. |
|---|---|
| | **PCT/CN2016/072790** |

| Patent Documents referred in the Report | Publication Date | Patent Family | Publication Date |
|---|---|---|---|
| WO 2014052249 A1 | 03 April 2014 | EP 2901699 A1 | 05 August 2015 |
| | | JP 2015534776 A | 03 December 2015 |
| | | US 2014092991 A1 | 03 April 2014 |
| | | TW 201431354 A | 01 August 2014 |
| | | KR 20150067157 A | 17 June 2015 |
| | | CN 104662906 A | 27 May 2015 |
| CN 103370935 A | 23 October 2013 | WO 2012108237 A1 | 16 August 2012 |
| | | AU 2012215968 B2 | 24 December 2015 |
| | | CA 2819401 A1 | 16 August 2012 |
| | | RU 2013136367 A | 10 February 2015 |
| | | EP 2675161 A1 | 18 December 2013 |
| | | SG 10201400975Q A | 30 July 2014 |
| | | TW 201249114 A | 01 December 2012 |
| | | AU 2012215968 A1 | 18 July 2013 |
| | | TW 201540048 A | 16 October 2015 |
| | | KR 20140010029 A | 23 January 2014 |
| | | CO 6751263 A2 | 16 September 2013 |
| | | US 2013322525 A1 | 05 December 2013 |
| | | JP 2015084556 A | 30 April 2015 |
| | | MX 2013008980 A | 01 November 2013 |
| | | CN 103780912 A | 07 May 2014 |
| | | US 2013251032 A1 | 26 September 2013 |
| | | US 2015043816 A1 | 12 February 2015 |
| | | US 2015063447 A1 | 05 March 2015 |
| | | US 8897361 B2 | 25 November 2014 |
| | | PH 12013501626 A1 | 14 October 2013 |
| | | VN 35608 A | 25 October 2013 |
| | | SG 192609 A1 | 30 September 2013 |
| | | JP 2012556813 X | 03 July 2014 |
| | | AU 2015202011 A1 | 14 May 2015 |
| | | IN 6891DELNP2013 | 12 December 2014 |
| | | HK 1193913 A0 | 03 October 2014 |
| CN 103959776 A | 30 July 2014 | RU 2014102576 A | 10 August 2015 |
| | | KR 20130002284 A | 07 January 2013 |
| | | KR 20140146559 A | 26 December 2014 |
| | | KR 20140075657 A | 19 June 2014 |
| | | JP 2015164331 A | 10 September 2015 |
| | | US 2015131742 A1 | 14 May 2015 |
| | | KR 101457398 B1 | 04 November 2014 |
| | | SG 10201408720T A | 29 January 2015 |
| | | KR 20150039144 A | 09 April 2015 |
| | | CN 104980757 A | 14 October 2015 |
| | | CN 105049864 A | 11 November 2015 |
| | | SG 10201408716T A | 27 February 2015 |
| | | JP 2015128334 A | 09 July 2015 |
| | | TW 201309030 A | 16 February 2013 |
| | | CA 2840583 A1 | 03 January 2013 |
| | | EP 2887669 A1 | 24 June 2015 |
| | | SG 10201408726Q A | 27 February 2015 |
| | | JP 2015128332 A | 09 July 2015 |

Form PCT/ISA/210 (patent family annex) (July 2009)

# INTERNATIONAL SEARCH REPORT
## Information on patent family members

| International application No. |
| --- |
| **PCT/CN2016/072790** |

| Patent Documents referred in the Report | Publication Date | Patent Family | Publication Date |
| --- | --- | --- | --- |
| | | EP 2728865 A2 | 07 May 2014 |
| | | US 2015163502 A1 | 11 June 2015 |
| | | US 2014192891 A1 | 10 July 2014 |
| | | JP 2014523183 A | 08 September 2014 |
| | | WO 2013002554 A3 | 11 April 2013 |
| | | KR 20150039143 A | 09 April 2015 |
| | | CN 104980756 A | 14 October 2015 |
| | | TW 201537967 A | 01 October 2015 |
| | | US 2015163516 A1 | 11 June 2015 |
| | | AU 2012276452 A1 | 30 January 2014 |
| | | KR 20150041772 A | 17 April 2015 |
| | | MX 2014000046 A | 17 February 2014 |
| | | WO 2013002554 A2 | 03 January 2013 |
| | | SG 10201408715U A | 27 February 2015 |
| | | US 2015139335 A1 | 21 May 2015 |
| | | CN 104994393 A | 21 October 2015 |
| | | CN 104980758 A | 14 October 2015 |
| | | JP 2015128333 A | 09 July 2015 |
| | | EP 2849444 A2 | 18 March 2015 |
| | PH 12014500016 A1 None | 19 May 2014 CN 104244007 A | 24 December 2014 |
| EP 2424240 A2 | 29 February 2012 | KR 20110139304 A | 28 December 2011 |
| | | US 2012069903 A1 | 22 March 2012 |
| | | US 8933989 B2 | 13 January 2015 |
| | | WO 2010123203 A2 | 28 October 2010 |
| CN 103561270 A | 05 February 2014 | None | |

Form PCT/ISA/210 (patent family annex) (July 2009)